# EUROPÄISCHE PATENTSCHRIFT

(11) **EP 3 837 036 B1**
(45) Veröffentlichungstag und Bekanntmachung des Hinweises auf die Patenterteilung: **27.07.2022**
(21) Anmeldenummer: 19759281.9
(22) Anmeldetag: 09.08.2019
(51) Int. Cl.: B01D 46/00, B01D 46/10, B01D 46/52

(54) **FILTERSTRUKTURKÖRPER UND FILTERMODUL ZUM ABSCHEIDEN VON VERUNREINIGUNGEN AUS EINEM ROHFLUIDSTROM**
FILTER STRUCTURAL BODY AND FILTER MODULE FOR SEPARATING IMPURITIES FROM A RAW GAS FLOW
CORPS À STRUCTURE FILTRANTE ET MODULE FILTRANT SERVANT À SÉPARER DES IMPURETÉS D'UN FLUX DE GAZ BRUT

(30) Priorität: 14.08.2018 DE 102018119684
(43) Veröffentlichungstag der Anmeldung: 23.06.2021
(73) Patentinhaber: Dürr Systems AG, 74321 Bietigheim-Bissingen (DE)
(72) Erfinder: SEYBOTH, Oliver, 71282 Hemmingen (DE)
(74) Vertreter: RPK Patentanwälte Reinhardt, Pohlmann und Kaufmann Partnerschaft mbB
(86) Internationale Anmeldenummer: PCT/DE2019/100721
(87) Internationale Veröffentlichungsnummer: WO 2020/035108

(56) Entgegenhaltungen:
- DE-A1-102015 112 113
- DE-A1-102015 202 257
- DE-A1-102016 001 889
- JP-A- H09 287 811
- US-A- 4 177 050
- US-A- 4 363 643
- US-A- 6 074 450
- US-A1- 2003 070 406
- US-A1- 2005 039 427

## Beschreibung

### Stand der Technik

Die Erfindung betrifft einen Filterstrukturkörper für ein Filtermodul zum Abscheiden von Verunreinigungen aus einem Verunreinigungen enthaltenden Rohfluidstrom, insbesondere zur Verwendung in einer Lackieranlage zum Lackieren von Werkstücken, insbesondere Fahrzeugkarosserien sowie ein Filtermodul mit einem Filterstrukturkörper und ein Verfahren zum Herstellen eines Filterstrukturkörpers.

Die DE 102011050915 A1 offenbart ein Papiergelegefiltermodul mit einem äußeren Rahmen und einem darin angeordneten dreidimensionalen Papiergelegefilter mit zwischen einzelnen Abschnitten des dreidimensionalen Papiergelegefilters angeordneten Abstandshaltern. Die Verwendung des Papiergelegefilters vergrößert die wirksame Fläche des Filtermoduls oder eines Farbnebelabscheidemoduls.

Weiter ist ein Papiergelegefiltermodul mit einem äußeren Rahmen und einem in Form einer mehrfach gefalteten Bahn dreidimensional angeordneten Papiergelegefilter offenbart. Dabei ist der Papiergelegefilter im Bereich von Wendepunkten der mehrfach gefalteten Bahn, den sogenannten Bugen, am Rahmen fixiert. Auch bei dieser Ausführungsform ist die Vergrößerung der wirksamen Fläche des Filtermoduls durch die Verwendung eines Papiergelegefilters erreicht.

Die US 4177050 A offenbart einen Luftfilter mit keilförmigen Segmenten, die auf der Einströmseite und auf der Abströmseite des Filtermediums angeordnet sind.

Das Filtermedium ist ein dünnes Glasfasermedium, das zur Versteifung mit einem Metallnetz überzogen ist und das gefaltet wird. Der Rand des Filtermediums wird mit dem Gehäuse verklebt.

Die DE 102015112113 A1 offenbart ein Verfahren zur Herstellung eines Filtermoduls, bei dem ein Filtermedium auf eine Kartonbahn befestigt wird und mit dieser U-förmig oder V-förmig zickzackartig gefaltet wird. Die Positionen der dabei gebildeten parallelen Flächen werden mit aus den Flächen ausklappbaren Laschen stabilisiert

Zur Gewährleistung eines Abstands zwischen den einander zugewandten Seiten der mehrfach gefalteten Papiergelegefilterbahn sind keine Abstandshalter erforderlich, vielmehr wird ein solcher Abstand durch die Fixierung der Papiergelegefilterbahn mit geeigneten Fixierungsmitteln im Bereich von sich bei der Faltung ergebenden Bugen in regelmäßigen Abständen am Rahmen erreicht.

### Offenbarung der Erfindung

Eine Aufgabe der Erfindung ist die Schaffung eines Filtermoduls, das einfacher herzustellen und Platz sparend zu transportieren ist.

Eine weitere Aufgabe ist die Bereitstellung eines Filterstrukturkörpers für ein solches Filtermodul.

Eine weitere Aufgabe ist die Bereitstellung eines Herstellverfahrens eines Filterstrukturkörpers für ein solches Filtermodul.

Die Aufgaben werden durch die Merkmale der unabhängigen Ansprüche gelöst. Günstige Ausgestaltungen und Vorteile der Erfindung ergeben sich aus den weiteren Ansprüchen, der Beschreibung und der Zeichnung.

Es wird nach einem Aspekt der Erfindung ein Filtermodul zum Abscheiden von Verunreinigungen aus einem Verunreinigungen enthaltenden Rohfluidstrom vorgeschlagen, umfassend wenigstens einen dreidimensionalen Filterstrukturkörper, durch welchen der Rohfluidstrom leitbar ist, und einen äußeren Rahmen zur Aufnahme des Filterstrukturkörpers zwischen einer rohgasseitigen Öffnung und einer reingasseitigen Öffnung. Der dreidimensionale Filterstrukturkörper umfasst eine Stützstruktur und eine darauf angeordnete Filterlage, welche eine Einströmfläche und eine Ausströmfläche aufweist. Die Stützstruktur weist mehrere kammartig ausgebildete Segmente jeweils mit einer Basis auf, von der in Längsrichtung der Basis voneinander beabstandete Zinken gemeinsam in eine Richtung abstehen, wobei die kammartigen Segmente deckungsgleich parallel zueinander angeordnet und mit orthogonal zu diesen angeordneten Verbindungselementen verbunden sind und ein formstabiles Gerüst bilden, in welches die Filterlage eingelegt ist.

Eine Auslegerichtung der Filterlage erstreckt sich in Längsrichtung der Basis.

Auf einer Seite der Filterlage sind Einströmbereiche der Einströmfläche und auf einer dieser gegenüberliegenden Seite der Filterlage Ausströmbereiche der Ausströmfläche angeordnet. Die Einströmbereiche bzw. die Ausströmbereiche erstrecken sich jeweils entlang von Außenkanten der Zinken zwischen Basis und basisfernen Enden der Zinken.

Die Stützstruktur ist vorzugsweise nur auf einer Seite der Filterlage angeordnet. Die Stützstruktur kann beispielsweise auf der Einströmseite der Filterlage angeordnet sein. Durch die kammartige Ausgestaltung der insbesondere flachen Segmente der Stützstruktur kann vermieden werden, dass Teile der Filterlage verdeckt werden und die durchströmbare Einströmfläche und Ausströmfläche hierdurch verkleinert wird.

Vorteilhaft kann ein solches Filtermodul im Industrielackierbereich und/oder in der Automobilkarossenlackierung eingesetzt werden.

Vorteilhaft kann die Stützstruktur als eine Art formstabiles Gerüst aufgebaut sein. Hierzu können mehrere kammartige Segmente deckungsgleich parallel zueinander angeordnet sein und mit orthogonal zu diesen angeordneten Verbindungselementen verbunden sein. Das Gerüst ermöglicht durch punktuelle oder linienförmige Stützflächen eine dreidimensionale Negativkontur der für die Filterlage vorgesehenen Wellenform auszubilden, in die die Filterlage einfach eingelegt werden kann. Hierdurch wird die Stabilität des Filterstrukturkörpers verbessert. Auch bei hoher Beladung des Filtermoduls kann ein Einknicken der Filterlage und daraus folgende Leckagen innerhalb des Filtermoduls vermieden werden.

Vorteilhaft kann die Filterlage durch die kammartige Struktur der Segmente wellenförmig entlang der Segmente ausgebildet sein. Vorzugsweise können die Segmente in äquidistanten Abständen vorgesehen sein.

Das kammartige Segment der Stützstruktur kann vorteilhaft durch Durchbrüche in der Fläche so gestaltet sein, dass bei Ausrichtung der Haltevorrichtung mit senkrecht stehenden Wellen das Herablaufen des abgeschiedenen Lacks im Filterinneren möglich ist. Bei Ausrichtung der Haltevorrichtung mit horizontal liegenden Wellen ist eine horizontale Strömung der Luft im Wellenzwischenraum möglich.

Durch die stabile, gerüstartige Stützstruktur kann verhindert werden, dass die Aufnahmekapazität des Filtermoduls reduziert wird. Ein rohgasseitiges Ausbauchen der Filterlage und damit Verkleinern von Einströmgassen kann vermieden werden. Ein Verkleinern der Einströmgassen könnte zu einem unerwünschten frühzeitigen Zusetzen der Filterlage mit beispielsweise Lackpartikeln führen.

Bei dem dreidimensionalen Filterstrukturkörper des Filtermoduls können beliebige Filterlagen in Wellenform gehalten und fixiert werden. In die dreidimensionale formgebende Stützstruktur wird die Filterlage eingelegt. Die Filterlage kann mit einer Fixierstruktur, beispielsweise mit Klemmkeilen, auf der Stützstruktur fixiert werden. Der Einsatz des Filterstrukturkörpers bei Gebrauch ist sowohl mit senkrechter als auch mit horizontaler Wellenausrichtung möglich. Ebenso sind Winkellagen dazwischen möglich.

Günstig ist ein quaderförmiger Rahmen zur Aufnahme des Filterstrukturkörpers, der über eine rohgasseitige Einströmöffnung und eine reingasseitige Ausströmöffnung auf der gegenüberliegenden Seite verfügt. Der Rahmen kann vorteilhaft aus Wellpappe gebildet sein.

Günstigerweise kann die Filterlage nur auf die Stützstruktur aufgelegt sein. Die Filterlage kann beispielsweise über Klemmkräfte mit der Stützstruktur verbunden sein.

Vorteilhaft kann die Filterlage zwischen der Stützstruktur und der Fixierstruktur angeordnet, insbesondere eingeklemmt, sein.

Fixierelemente in Form von Klemmkeilen können auf ihrer Schmalseite gerundet ausgeführt sein, um ein leichtes Einschieben in die Wellenzwischenräume zu ermöglichen und die Gefahr der Beschädigung der Filterlage zu minimieren. Für unterschiedlich dicke Filterlagen können Fixierelemente mit unterschiedlichen Breiten eingesetzt werden, um eine sichere Klemmung der Filterlagen zu gewährleisten.

Die Klemmkeile der Fixierstruktur können ebenfalls gerüstartig aufgebaut und so dimensioniert sein, dass sie nach dem Einlegen der Filterlage in die freien Wellentäler eingeschoben werden können und die Filterlage punktuell oder linienförmig an die Stützstruktur andrücken. Die Klemmkeile können deckungsgleich parallel vorgesehen sein und durch Verbindungselemente verbunden sein. Die Klemmkeile können beispielsweise trapezförmig oder dreiecksförmig ausgebildet sein und vorzugsweise der Form der freien Querschnittsfläche der Zwischenräume der eingelegten Filterlage entsprechen.

Der Filterstrukturkörper erlaubt eine zuverlässige Abdichtung zwischen Filterlage bzw. Stützstruktur und Rahmen.

Die Durchströmungsrichtung des Filterstrukturkörpers ist vorzugsweise so gewählt, dass die Stützstruktur sich rohgasseitig vor der Filterlage befindet, während die Fixierstruktur reingasseitig angeordnet ist. Bei der beschriebenen Anordnung der Verbindungselemente ergibt sich dadurch der Vorteil, dass die Verbindungselemente nicht in der Einströmöffnung in die Wellenzwischenräume liegen, sondern mittig vor den Stirnflächen (Wellenbergen) angeordnet sind. Dies führt zu einer günstigen Strömungsführung in die Wellenzwischenräume und verhindert zugleich ein vorzeitiges Zusetzen der Einströmöffnungen durch an den Verbindungselementen anhaftenden Lack. Außerdem bieten die Verbindungselemente Abschlagflächen für den Lack vor der Filterlage, wodurch die Standzeit zusätzlich erhöht wird.

Bei rohgasseitiger Anordnung der Stützstruktur kann es vorteilhaft sein, wenn die vor den Wellen der Filterlage verlaufenden Verbindungselemente so geformt sind, dass sie als Leitelement dienen, um eine verbesserte Strömungsführung in die Wellenzwischenräume zu bewirken. Insbesondere kann es vorteilhaft sein, wenn die als Leitelemente dienenden Verbindungselemente die Wellenberge aus Einströmrichtung gesehen vollständig verdecken und die freien Einströmquerschnitte in die Wellenzwischenräume verkleinern, so dass es zu einer erhöhten Beschleunigung des eintretenden Fluidstroms, insbesondere Luftstroms, kommt.

Durch diese Beschleunigung dringt die Luft mit den enthaltenen Lackpartikeln noch tiefer in den Wellenzwischenraum ein, so dass dieser entgegen der Strömungsrichtung von hinten nach vorne mit Lack beladen wird, wodurch die Aufnahmekapazität des Filtermoduls steigt.

Vorteilhaft kann die Stützstruktur aus mehreren, parallel zueinander angeordneten kammartigen Segmenten zusammengesetzt sein. Vorteilhafterweise kann die Stützstruktur aus zusammengesteckten Elementen gebildet sein. Dies erleichtert den Zusammenbau des Filtermoduls und des Filterstrukturkörpers.

Die Filterlage kann beispielsweise aus einer geschlitzten Papierbahn gebildet sein. Neben Papier können auch Polyestervlies oder Glasfasermaterial verwendet werden. Optional sind auch andere Filtervliese, Filtergewebe, Filterpapiere sowie Matten aus anderen Fasermaterialien wie beispielsweise Kokosfasern möglich.

Die Filterlage kann einlagig ausgebildet sein. Alternativ kann die Filterlage mehrlagig ausgebildet sein. Beispielsweise kann auf eine gröbere Lage, etwa aus geschlitztem Papier, eine feinere Lage, etwa eine Vliesmatte, beispielsweise aus Polyester, folgen. Die gröbere Lage kann ein hohes Speichervermögen aufweisen, während die feinere Lage ein geringeres Speichervolumen als diese aufweisen kann.

Günstigerweise kann die Filterlage als biegeweiche Matte ausgebildet sein. Die Filterlage kann dann beispielsweise als Rollenmaterial bevorratet werden. Ist die Filterlage mehrlagig ausgebildet, können die verschiedenen Lagen der Filterlage optional nacheinander in die Stützstruktur eingebracht werden. Es ist nicht notwendig, die mehreren Lagen der Filterlage vor dem Einbau in die Stützstruktur miteinander zu verbinden. Dies vereinfacht den Zusammenbau des Filtermoduls und spart Kosten.

Alternativ können die verschiedenen Lagen der Filterlage lose aufeinander gelegt und in die Stützstruktur eingelegt und fixiert werden.

Optional kann ein Verbinden der Lagen vor dem Einbringen in die Stützstruktur erfolgen, was ein Ausrichten der einzelnen Lagen erspart.

Wird die Filterlage auf dem wenigstens einen kammartigen Segment der Stützstruktur aufgelegt, kann die Filterlage beispielsweise wellenförmig entlang der Basis der Stützstruktur verlaufen. Ein Wellenende kann an der Basis und ein nächstes Wellenende am basisfernen Ende eines Zinkens angeordnet sein.

Mehrere Filterstrukturkörper können in einem gemeinsamen Rahmen hintereinander oder nebeneinander angeordnet sein.

Vorteilhaft kann auch der Einsatz mehrerer Filterstrukturkörper in jeweils eigenen Rahmen hintereinander sein. Durch den Einsatz unterschiedlicher Filterlagen können auf diese Weise Grobabscheidung und Feinabscheidung voneinander getrennt werden.

Dies erlaubt einen Austausch der beladenen Filterstufen unabhängig voneinander. Durch den Einsatz verschieden grober und verschieden feiner Filterlagen ergibt sich außerdem eine Vielzahl an Kombinationsmöglichkeiten, die es erlaubt, die Filterkombination nach Bedarf an verschiedene Lacke und Lackierprozesse anzupassen.

Nach einer günstigen Ausgestaltung des Filtermoduls kann die Filterlage mit einer Fixierstruktur, umfassend wenigstens ein Fixierelement, in der Stützstruktur fixiert sein. Vorteilhaft kann das Fixierelement auf der der Stützstruktur gegenüberliegenden Seite der Filterlage eingesetzt sein. Ist die Filterlage wellenförmig entlang der Basis ausgebildet, kann das Fixierelement Bestandteil einer Fixierstruktur mit mehreren Fixierelementen sein. Als Fixierelement ist ein Klemmkeil günstig, der eine wenigstens annähernd trapezförmige oder dreiecksförmige Form aufweist.

Vorteilhaft wirken Stützstruktur und Fixierstruktur zusammen, wobei die Fixierstruktur in Freiräume der Stützstruktur und die Fixierstruktur in Freiräume der Stützstruktur eingreifen, wobei die Filterlage zwischen Stützstruktur und Fixierstruktur angeordnet ist. Dadurch gelingt eine stabile Sicherung der Filterlage auf der Stützstruktur.

Günstigerweise können Elemente der Stützstruktur und/oder der Fixierstruktur als Flachteile ausgeführt sein.

Nach einer günstigen Ausgestaltung des Filtermoduls kann die Basis einstückig ausgebildet sein. Die Basis kann in der Art einer Leiste ausgebildet sein. Optional kann die Basis aus einzelnen Basissegmenten zusammengesetzt sein, welche erst durch Verbindungselemente und/oder die Filterlage zusammengehalten werden.

Nach einer günstigen Ausgestaltung des Filtermoduls können die Zinken sich von der Basis weg verjüngen. Dadurch kann die Filterlage leichter in Zwischenräume benachbarter Zinken eingebracht werden.

Ferner können hierdurch die Abstände zwischen den Wellenbergen auf der Rohgasseite breiter sein als auf der Reingasseite des Filtermoduls. Dies erhöht die Standzeit, da diese "Einströmgassen" rohgasseitig sukzessive durch Lack zugesetzt werden.

Nach einer günstigen Ausgestaltung des Filtermoduls kann die Filterlage eine Filtermatte umfassen, die insbesondere eine biegeweiche Filtermatte sein kann. Vorteilhaft kann die Filterlage eine ausreichende Eigenstabilität so aufweisen, dass sie weich genug ist, damit ein Einlegen der Filterlage in die Zwischenräume der Zinken problemlos gelingt, jedoch die Einströmbereiche der Einströmfläche stabil aufspannt sind, wenn sie in die Stützstruktur eingelegt ist.

Nach einer günstigen Ausgestaltung des Filtermoduls kann der Filterstrukturkörper verbindungsmittelfrei in dem äußeren Rahmen fixiert sein. Insbesondere kann der Filterstrukturkörper im Wesentlichen formschlüssig in dem äußeren Rahmen fixiert sein.

Nach einer günstigen Ausgestaltung des Filtermoduls kann die Filterlage entlang der Basis der Segmente der Stützstruktur in Wellen ausgelegt sein. Dies erlaubt eine günstige Konfiguration des Filterstrukturkörpers beim Zusammenwirken von Stützstruktur und Fixierstruktur. Optional kann am Anfang und am Ende der Filterlage ein Überstand über die Stützstruktur vorgesehen sein. Der Überstand kann vorteilhaft zum Abdichten des Filterstrukturkörpers gegenüber dem Rahmen dienen. Optional kann ein Überstand der Längsseiten der Filterlage über die Stützstruktur vorgesehen sein. Dies verbessert die Abdichtung des Filterstrukturkörpers gegenüber dem umgebenden Rahmen.

Nach einer günstigen Ausgestaltung kann im Rahmen ein Grobabscheider gefolgt von einer Feinfilterstufe angeordnet sein. Die Feinfilterstufe ist aus einem erfindungsgemäßen Filterstrukturkörper gebildet. Der Grobascheider kann insbesondere zur Trägheitsabscheidung von in einem durchströmenden Fluid enthaltenen Komponenten, insbesondere Lackpartikel und/oder Lackagglomerate vorgesehen sein. Insbesondere kann der Grobabscheider eingangsseitig wenigstens eine Beschleunigungsstrecke für das Fluid aufweisen, in welcher das Fluid in einer Durchströmungsrichtung beschleunigt wird und der Beschleunigungsstrecke eine erste Abschlagfläche für im Fluid enthaltene Komponenten nachgeschaltet ist.

Nach einer günstigen Ausgestaltung kann eine Ausdehnung der Beschleunigungsstrecke zwischen Bodenteil und Deckelteil des Grobabscheiders quer, insbesondere senkrecht, zu Wellen der Filterlage der Feinfilterstufe ausgerichtet sein. Diese Orientierung der Wellen ermöglicht eine horizontale Strömung in den Wellenzwischenräumen der Filterlage. Würde der Grobabscheider beispielsweise um die x-Achse verkippt, ist es vorteilhaft, die relative Orientierung der Wellen der Filterlage der Feinfilterstufe quer zu der Ausdehnung der Beschleunigungsstrecke zu erhalten.

Nach einem weiteren Aspekt der Erfindung wird ein Filterstrukturkörper für ein erfindungsgemäßes Filtermodul zum Abscheiden von Verunreinigungen aus einem Verunreinigungen enthaltenden Rohfluidstrom vorgeschlagen. Der Filterstrukturkörper umfasst eine Stützstruktur und eine darauf angeordnete Filterlage, welche eine Einströmfläche und eine Ausströmfläche aufweist. Die Stützstruktur weist mehrere kammartig ausgebildete Segmente jeweils mit einer Basis auf, von der in Längsrichtung der Basis voneinander beabstandete Zinken gemeinsam in eine Richtung abstehen, wobei die kammartigen Segmente deckungsgleich parallel zueinander angeordnet und mit orthogonal zu diesen angeordneten Verbindungselementen verbunden sind und ein formstabiles Gerüst bilden, in welches die Filterlage eingelegt ist, und wobei sich eine Auslegerichtung der Filterlage in Längsrichtung der Basis erstreckt.

Auf einer Seite der Filterlage sind Einströmbereiche der Einströmfläche und auf einer dieser gegenüberliegenden Seite der Filterlage Ausströmbereiche der Ausströmfläche angeordnet, die sich jeweils entlang der Zinken zwischen Basis und basisfernem Enden der Zinken erstrecken.

Der Filterstrukturkörper kann beispielsweise als Feinfilterstufe eingesetzt werden, beispielsweise mit einer Feinfiltermatte aus Polyestervlies oder Glasfasermaterial als Filterlage. Die Feinfilterstufe kann als Nachfilter hinter einem Grobabscheider zum Einsatz kommen, der beispielsweise nach dem Trägheitsprinzip arbeitet.

Alternativ kann der Filterstrukturkörper beispielsweise als kombinierter Abscheider eingesetzt werden, in dem eine mehrlagige Filterlage zum Einsatz kommt, etwa mit einer groben Filtermatte als Vorabscheidematte vor der Feinfiltermatte zur Vorabscheidung. Als Vorabscheidematte können insbesondere mehrlagige Filtermatten aus geschlitzten Papierbahnen in Frage kommen. Ein Vorteil ist, dass sich ein hohes Speichervermögen mit einer guten Feinabscheidung, insbesondere hoher Abscheideeffizienz, verbinden lässt.

Alternativ kann ein ähnlicher Vorteil auch dadurch erreicht werden, dass (nur) eine Filterlage aus einer feinen Filtermatte eingesetzt wird, die zur Erhöhung des Speichervolumens auf der Anströmseite ihrerseits eine dreidimensional geformte Oberfläche aufweist. Auf diese Weise steht eine größere Oberfläche zur Anlagerung des abgeschiedenen Lacks zu Verfügung, so dass die Filterlage nicht so schnell verstopft. Diese Variante kann weitere Vorteile bieten, wie geringere Materialkosten, geringerer Zusammenbauaufwand für das Filtermodul, da nur eine Filterlage eingelegt werden muss, erhöhte Abscheideeffizienz und Speicherkapazität in bestimmten Anwendungsfällen, insbesondere, wenn die Lackpartikel relativ trocken sind.

Die Filterlage kann auch durch mehrere Lagen gebildet werden, von denen wenigstens die rohgasseitige Lage dergestalt dreidimensional strukturiert ist.

Bei einer Anwendung des Filterstrukturkörpers hinter einem Grobabscheider in einem gemeinsamen Rahmen kann die Stützstruktur mit der Grobabscheiderstruktur verbunden oder Bestandteil dieser Grobabscheiderstruktur sein.

Ein vorteilhafter Grobabscheider kann wenigstens ein Abscheidesegment aufweisen, das eingangsseitig des Grobabscheiders wenigstens eine Beschleunigungsstrecke für das Fluid aufweist, in welcher das Fluid in einer Durchströmungsrichtung beschleunigt wird, und wobei der Beschleunigungsstrecke eine erste Abschlagfläche für im Fluid enthaltene Komponenten nachgeschaltet ist.

Die erste Abschlagfläche kann einen Prallbereich und einen in Strömungsrichtung folgenden gekrümmten Abschnitt zur Richtungsumlenkung des Fluids um wenigstens 45°, vorzugsweise um wenigstens 180°, zur Durchströmungsrichtung des Fluids in der Beschleunigerstrecke aufweisen.

Insbesondere kann die erste Abschlagfläche entlang des gekrümmten Abschnitts durchgehend ausgebildet sein.

Vorteilhaft kann in der Abscheidestufe eine strömungstechnisch optimierte geometrische Struktur zur Trägheitsabscheidung realisiert werden, insbesondere die geometrische Struktur eines günstigen durchströmten labyrinthartigen Strömungspfades. Entlang einer Abschlagfläche, an der mit wesentlichen Lackanhaftungen zu rechnen ist, kann ein möglichst großer freier Strömungsquerschnitt bereitgestellt werden. Trotz des an sich prinzipiell bedingten Zielkonflikts von hoher Abscheideeffizienz und geringem Druckverlust kann durch eine strömungstechnisch optimierte Abscheidestruktur eine möglichst hohe Abscheideeffizienz bei möglichst geringem Druckverlust erreicht werden. Vorzugsweise ist die Abschlagfläche mit einem Prallabschnitt quer zum Ausgang der Beschleunigungsstrecke angeordnet.

Ebenso kann optional durch eine geeignete und bedarfsangepasste Formgebung und Anordnung von Beschleunigungsstrecke und Abschlagfläche eine hohe Speicherkapazität für abgeschiedenen Lack erreicht werden. Dies ist gleichbedeutend mit einem durch zunehmende Lackbeladung nur geringfügig ansteigenden Durchströmungswiderstand der Abscheidestufe.

Insbesondere können der Abscheidestufe eine x-Achse, eine y-Achse und eine z-Achse zugeordnet sein, die jeweils senkrecht zueinander stehen.

Die Hauptdurchströmungsrichtung des Fluids in der Beschleunigungsstrecke ist als gedachte gerade Verbindung zwischen Eingangsseite und Ausgangsseite der Beschleunigungsstrecke zu verstehen, wobei die Strömung an der Eingangsseite in die Beschleunigungsstrecke eintritt und an der Ausgangsseite, welche der Eingangsseite gegenüberliegt, wieder austritt, unabhängig davon, ob im Innern der Beschleunigungsstrecke eine oder mehrere Richtungsumkehrungen erfolgen.

Die x-Achse entspricht der Hauptdurchströmungsrichtung.

Entlang der y-Achse ist der freie Strömungsquerschnitt am Eintritt des Fluids in die Beschleunigungsstrecke zwischen Anströmflächen der Abscheidestufe angeordnet.

Beispielsweise kann die x-Achse einer Längsachse der Beschleunigungsstrecke entsprechen, die z-Achse einer Hochachse und die y-Achse einer Querachse.

Günstigerweise ist die Beschleunigungsstrecke als Düse ausgebildet mit einem großen freien Strömungsquerschnitt am Eintritt des Fluids in die Beschleunigungsstrecke, der sich in Durchströmungsrichtung verjüngt. Der freie Strömungsquerschnitt am Eintritt des Fluids in die Beschleunigungsstrecke liegt parallel zu y-Achse und z-Achse.

Nach einer günstigen Ausgestaltung des Filterstrukturkörpers kann die Filterlage mit einer Fixierstruktur, umfassend wenigstens ein Fixierelement, in der Stützstruktur fixiert sein. Vorteilhaft kann das Fixierelement auf der der Stützstruktur gegenüberliegenden Seite der Filterlage eingesetzt sein. Ist die Filterlage wellenförmig entlang der Basis ausgebildet, kann das Fixierelement Bestandteil einer Fixierstruktur mit mehreren Fixierelementen sein.

Vorteilhaft wirken Stützstruktur und Fixierstruktur zusammen, wobei die Fixierstruktur in Freiräume der Stützstruktur und die Fixierstruktur in Freiräume der Stützstruktur eingreifen, wobei die Filterlage zwischen Stützstruktur und Fixierstruktur angeordnet ist. Dadurch gelingt eine stabile Sicherung der Filterlage auf der Stützstruktur.

Günstigerweise können Elemente der Stützstruktur und/oder der Fixierstruktur als Flachteile ausgeführt sein.

Nach einer günstigen Ausgestaltung des Filterstrukturkörpers kann die Basis einstückig ausgebildet sein. Die Basis kann in der Art einer Leiste ausgebildet sein. Optional kann die Basis aus einzelnen Basissegmenten zusammengesetzt sein, welche erst durch Verbindungselemente und/oder die Filterlage zusammengehalten werden.

Nach einer günstigen Ausgestaltung des Filterstrukturkörpers können die Zinken sich von der Basis weg verjüngen. Dadurch kann die Filterlage leichter in Zwischenräume benachbarter Zinken eingebracht werden.

Nach einer günstigen Ausgestaltung des Filterstrukturkörpers kann die Stützstruktur die Filterlage im Vergleich mit einer Ausdehnung der Filterlage im Strömungsquerschnitt im Wesentlichen linienförmig berühren. Der durchströmbare Querschnitt der Filterlage bleibt durch die Stützstruktur praktisch unbeeinflusst. Optional kann die Fixierstruktur so ausgeführt sein, dass die Fixierstruktur die Filterlage bezogen auf eine Ausdehnung der Filterlage im Strömungsquerschnitt im Wesentlichen linienförmig berühren kann. Der durchströmbare Querschnitt der Filterlage bleibt durch die Fixierstruktur praktisch unbeeinflusst.

Nach einer günstigen Ausgestaltung des Filterstrukturkörpers kann die Filterlage am Anfang und am Ende der Filterlage ein Überstand über die Stützstruktur vorgesehen sein. Der Überstand kann vorteilhaft zum Abdichten des Filterstrukturkörpers gegenüber dem Rahmen dienen. Optional kann ein Überstand der Längsseiten der Filterlage über die Stützstruktur vorgesehen sein. Dies verbessert die Abdichtung des Filterstrukturkörpers gegenüber dem umgebenden Rahmen.

Nach einem weiteren Aspekt der Erfindung wird ein Bausatz zur Herstellung eines erfindungsgemäßen Filterstrukturkörpers für ein erfindungsgemäßes Filtermodul zum Abscheiden von Verunreinigungen aus einem Verunreinigungen enthaltenden Rohfluidstrom vorgeschlagen. Der Filterstrukturkörper weist eine Stützstruktur auf, wobei die Stützstruktur aus Komponenten zusammensetzbar ist, die aus einem vorgeprägten und/oder vorgestanzten Zuschnitt, insbesondere einem vorgeprägten und/oder vorgestanzten Zuschnitt aus Karton und/oder Wellpappe und/oder Faserformteilen und/oder Tiefziehteilen aus Kunststoff, entnehmbar sind.

Vorteilhaft wird ermöglicht, den Filterstrukturkörper mit wenigen Handgriffen aufzubauen. Der Filterstrukturkörper kann als Zuschnitt Platz sparend und Kosten sparend transportiert werden und erst vor Ort aufgebaut werden. Die Filterlage kann als Matte ebenso Platz und Kosten sparend transportiert werden.

Die Herstellung der Komponenten für Stützstruktur und Fixierstruktur als Stanzteile, insbesondere Wellpappe-Stanzteile, ist weltweit kostengünstig möglich. Die Komponenten erfordern im Vergleich zu anderen Filterkonstruktionen einen sehr geringen Einsatz an Rohmaterial. Der Zusammenbau von Stützstruktur und Fixierstruktur und das Einlegen der Filterlage ist sehr einfach, und vorteilhaft auch direkt am Einsatzort möglich.

Der Filterstrukturkörper kann für beliebige Filtrationsprozesse zum Einsatz kommen.

Die Ausführung insbesondere der Stützstruktur aus Wellpappe ist aufgrund der Materialeigenschaften in erster Linie zur Abscheidung von festen oder zähflüssigen Partikeln aus Gasströmen geeignet.

Vorteilhaft ist die Anwendung zur Abscheidung von Lacknebel aus Beschichtungsprozessen, insbesondere von Nasslacken. Das Einsatzgebiet können verschiedene Lackierprozesse sein, von kleinen Handlackierständen in der allgemeinen Industrie bis hin zu vollautomatischen Anlagen für die Großserienlackierung im Automobilbereich. Insbesondere kann ein Einsatz in Abscheidesystemen vorgesehen sein, bei denen die Filtermodule in beweglichen Trolleys an die Lackierkabine angeschlossen sind, um einen Filtertausch bei laufendem Lackierbetrieb zu ermöglichen.

Der Zusammenbau der Komponenten ist intuitiv und mit geringem Zeitaufwand möglich. Der Zusammenbau wird insbesondere dadurch vereinfacht, dass die formstabile Stützstruktur zugleich als Aufbauhilfe dient.

Nach einer günstigen Ausgestaltung kann zum Zusammenbau eine Montagevorrichtung für den Aufbau des Filterstrukturkörpers und eine Rahmen-Montagevorrichtung zum Einführen des Filterstrukturkörpers in den Rahmen eingesetzt werden. In der Montagevorrichtung können die Einzelteile der Stützstruktur eingesetzt werden, um diese in Position zu halten.

Mit der Rahmen-Montagevorrichtung kann der Filterstrukturkörper passgenau im Rahmen positioniert werden.

Die Komponenten für den Filterstrukturkörper weisen ein äußerst geringes Transportvolumen auf, da es sich um flache Stanzteile handelt, die platzsparend gestapelt werden können. Die in die Stützstruktur einzulegenden Filterlagen können unabhängig beispielsweise als Rollenware ebenfalls platzsparend angeliefert werden. Auch die erforderlichen Lagerflächen sind entsprechend gering.

Nach einer günstigen Ausgestaltung des Bausatzes können im Zuschnitt Komponenten für ein oder mehrere Fixierelemente einer Fixierstruktur umfasst sein. Diese können vorgestanzt oder vorgeprägt werden und zum Aufbau des Filterstrukturkörpers aus dem Zuschnitt gelöst werden.

Der Bausatz für die Herstellung einer Haltevorrichtung aus Stützstruktur und Fixierstruktur kann vorzugsweise eine Mehrzahl von nur drei verschiedenen Wellpappe-Bauteilen (Flächenzuschnitte) umfassen, nämlich kammartige Segmente der Stützstruktur, näherungsweise trapezförmigen Flächenelementen als Klemmkeile der Fixierstruktur und Verbindungselemente, die für die Stützstruktur und die Fixierstruktur identisch sein können.

Optional kann ein Bausatz zur Herstellung eines erfindungsgemäßen Filtermoduls mit einem erfindungsgemäßen Filterstrukturkörper für ein erfindungsgemäßes Filtermodul zum Abscheiden von Verunreinigungen aus einem Verunreinigungen enthaltenden Rohgasstrom vorgesehen sein. Der Filterstrukturkörper weist eine Stützstruktur auf, wobei die Stützstruktur aus Komponenten zusammensetzbar ist, die aus einem vorgeprägten und/oder vorgestanzten Zuschnitt, insbesondere einem vorgeprägten und/oder vorgestanzten Zuschnitt aus Karton und/oder Wellpappe und/oder Faserformteilen und/oder Tiefziehteilen aus Kunststoff, entnehmbar sind. Ebenso kann ein Rahmen einem vorgestanzten Zuschnitt, insbesondere einem vorgeprägten und/oder vorgestanzten Zuschnitt aus Karton und/oder Wellpappe und/oder Faserformteilen und/oder Tiefziehteilen aus Kunststoff, entnehmbar sein.

Nach einem weiteren Aspekt der Erfindung wird ein Verfahren zur Herstellung eines eine Stützstruktur umfassenden erfindungsgemäßen Filterstrukturkörpers vorgeschlagen, der für ein erfindungsgemäßes Filtermodul zum Abscheiden von Verunreinigungen aus einem Verunreinigungen enthaltenden Rohgasstrom, vorgesehen ist.

Das Verfahren umfasst ein Zusammenstecken einer formstabilen Stützstruktur aus mehreren kammartigen Segmenten und Verbindungselementen, wobei die kammartigen Segmente deckungsgleich parallel zueinander angeordnet und mit orthogonal zu diesen angeordneten Verbindungselementen verbunden sind und zum Einlegen einer Filterlage ein formstabiles Gerüst bilden; ein Zusammenstecken einer Fixierstruktur aus Fixierelementen und Verbindungselementen, ein Einlegen der Filterlage mit ihrer Auflagefläche entlang von Basis und Zinken der Stützstruktur; ein Fixieren der Filterlage auf der Stützstruktur durch Einstecken wenigstens einer Fixierstruktur in Zwischenräume der eingelegten Filterlage.

Günstigerweise erfolgt das Zusammenstecken der Stützstruktur in einer Montagevorrichtung, die erste Aufnahmen zum Einstecken von Verbindungselementen und senkrecht dazu verlaufende zweite Aufnahmen zum Einstecken von kammartigen Strukturen aufweist.

Die Montagevorrichtung kann ebenso zum Zusammenstecken der Fixierstruktur verwendet werden.

Das Einlegen und Fixieren der Filterlage in die Stützstruktur kann günstigerweise in der Montagevorrichtung erfolgen.

In einer Rahmen-Montagevorrichtung kann der Filterstrukturkörper in einen Rahmen eingeführt werden, wobei der Rahmen in der Rahmen-Montagevorrichtung über eine Ablage geschoben wird und ein Einführen des Filterstrukturkörpers bis zur Ablage in den Rahmen erfolgt. Damit ist der Filterstrukturkörper in der richtigen Position im Rahmen, um diesen schließen zu können.

Es versteht sich, dass auch eine Kombination von Grobabscheider mit Feinfilterstufe auf diese Weise passgenau in den Rahmen eingeführt werden kann.

### Zeichnung

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: eine Draufsicht auf eine einströmseitige Öffnung eines Filtermoduls nach einem Ausführungsbeispiel der Erfindung;
- Fig. 2: eine aus mehreren parallel zueinander angeordneten kammartigen Segmenten zusammengesteckte Stützstruktur nach einem Ausführungsbeispiel der Erfindung;
- Fig. 3: ein kammartiges Segment mit wellenförmiger Basis der Stützstruktur nach Figur 2;
- Fig. 4: ein Verbindungselement zum Verbinden von kammartigen Segmenten der Stützstruktur nach Figur 2;
- Fig. 5: ein alternatives kammartiges Segment mit gerader Basis einer Stützstruktur nach einem Ausführungsbeispiel der Erfindung;
- Fig. 6: einen Filterstrukturkörper mit einer in eine Stützstruktur eingelegten und mit Fixierelementen darin festgeklemmten Filterlage nach einem Ausführungsbeispiel der Erfindung;
- Fig. 7: ein aus mehreren Komponenten zusammengestecktes Fixierelement mit einer Mehrzahl von konischen Elementen und Verbindungselementen;
- Fig. 8: ein konisches Element des Fixierelements nach Figur 7;
- Fig. 9: ein Verbindungselement des Fixierelements nach Figur 7;
- Fig. 10: ein Filtermodul mit Filterstrukturkörper und äußerem Rahmen beim Einsetzen des Filterstrukturkörpers in den äußeren Rahmen;
- Fig. 11: ein günstiger Grobabscheider, der nach dem Trägheitsprinzip arbeitet;
- Fig. 12: ein Querschnitt durch den Grobabscheider nach Figur 11;
- Fig. 13: schematisch eine Hintereinanderschaltung von Grobabscheider und Feinfilterstufe;
- Fig. 14: ein kammartiges Segment für eine Feinfilterstufe;
- Fig. 15: als Seitenansicht eine Filterlage mit welliger Oberfläche;
- Fig. 16: in Draufsicht eine Filterlage mit einer netzartigen Struktur an der Oberfläche;
- Fig. 17: eine Montagevorrichtung zum Aufbau von Stützstruktur und Fixierstruktur eines Filterstrukturkörpers nach der Erfindung;
- Fig. 18: schematisch eine Stützstruktur montiert in einer Montagevorrichtung nach Figur 17;
- Fig. 19: als Seitenansicht eine Montagevorrichtung zum Einbau eines Filterstrukturkörpers in einen als Umkarton gestalteten Rahmen;
- Fig. 20: in perspektivischer Ansicht die Montagevorrichtung zum Einbau eines Filterstrukturkörpers nach Figur 19;
- Fig. 21: als Seitenansicht die Montagevorrichtung nach Figur 19 mit eingesetztem Umkarton;
- Fig. 22: ein Flussdiagramm eines günstigen Verfahrens zum Aufbau eines Filtermoduls.

### Ausführungsformen der Erfindung

In den Figuren sind gleichartige oder gleichwirkende Komponenten mit gleichen Bezugszeichen beziffert. Die Figuren zeigen lediglich Beispiele und sind nicht beschränkend zu verstehen.

Im Folgenden verwendete Richtungsterminologie mit Begriffen wie "links", "rechts", "oben", "unten", "davor" "dahinter", "danach" und dergleichen dient lediglich dem besseren Verständnis der Figuren und soll in keinem Fall eine Beschränkung der Allgemeinheit darstellen. Die dargestellten Komponenten und Elemente, deren Auslegung und Verwendung können im Sinne der Überlegungen eines Fachmanns variieren und an die jeweiligen Anwendungen angepasst werden.

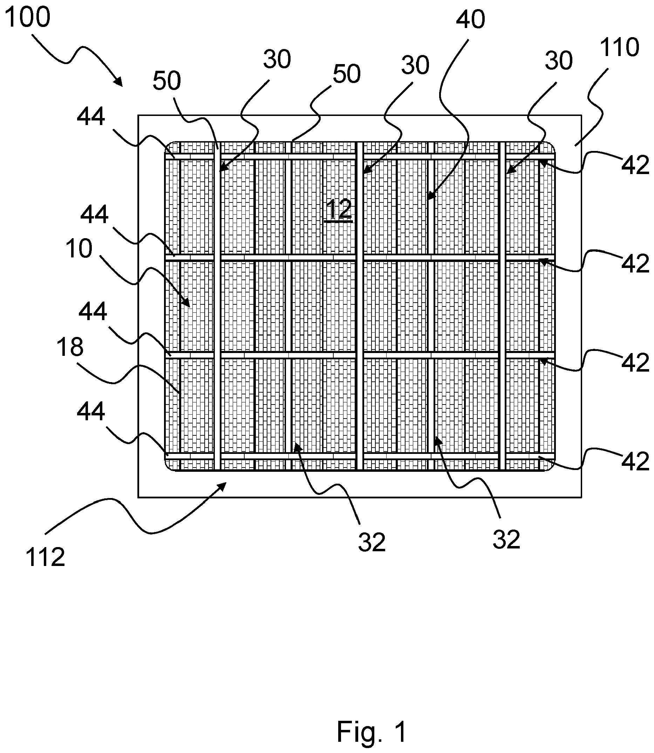

Figur 1 zeigt eine Draufsicht auf eine einströmseitige Öffnung 112 eines Filtermoduls 100 nach einem Ausführungsbeispiel der Erfindung. Durch die einströmseitige Öffnung 112 strömt Rohgas in das Filtermodul 100. Die einströmseitige Öffnung 112 bildet somit eine rohgasseitige Öffnung 112.

Das Filtermodul 100 dient zum Abscheiden von Verunreinigungen aus einem Verunreinigungen enthaltenden Rohgasstrom. Das Filtermodul 100 umfasst einen dreidimensionalen Filterstrukturkörper 10, durch welchen der Rohgasstrom leitbar ist, und einen äußeren Rahmen 110 zur Aufnahme des Filterstrukturkörpers 10 zwischen der rohgasseitigen Öffnung 112 und einer reingasseitigen Öffnung, die in dieser Ausgestaltung beispielsweise der reingasseitigen Öffnung 112 gegenüberliegt und nicht sichtbar ist. Eine Hauptdurchströmungsrichtung ist von der rohgasseitigen Öffnung 112 zur reingasseitigen Öffnung gerichtet.

In der gezeigten Draufsicht ist die Filterlage 12 wellenförmig angeordnet, mit drei Wellenbergen an der rohgasseitigen Öffnung 112 des Filtermoduls 100 und drei Wellentälern am entgegengesetzten Ende des Filtermoduls 100.

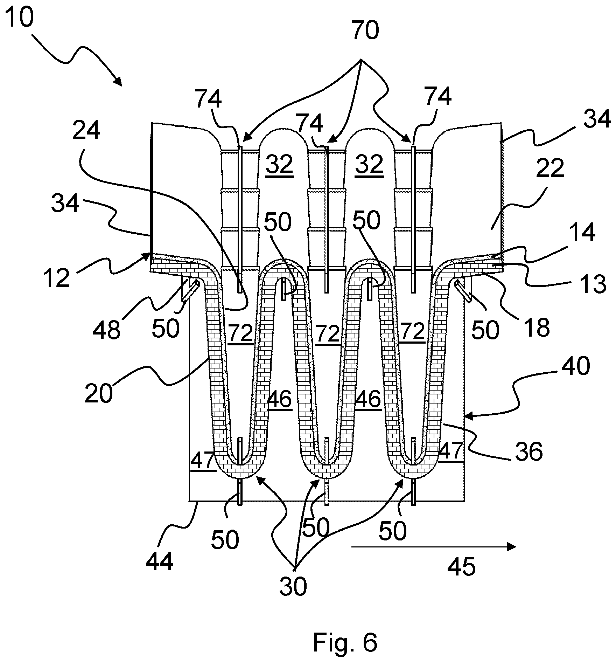

Der dreidimensionale Filterstrukturkörper 10 umfasst eine Stützstruktur 40 und eine darauf angeordnete Filterlage 12, welche eine Einströmfläche 18, durch die das rohgasseitige Fluid in die Filterlage 12 eintritt, und eine dieser gegenüberliegende Ausströmfläche 22 (s. Figur 6) aufweist, durch die das gefilterte Fluid aus der Filterlage 12 austritt.

Die Stützstruktur 40 umfasst wenigstens ein, in diesem Ausführungsbeispiel vier kammartig ausgebildete Segmente 42. Die Stützstruktur 40 ist im Folgenden detailliert beschrieben.

Es hat sich gezeigt, dass eine Anpassung des Verhältnisses von Einströmfläche 18 zu rohgasseitigem Strömungsquerschnitt sich vorteilhaft auf die Filterstandzeit auswirken kann. Die rohgasseitige Öffnung 112 vor dem Filterstrukturkörper 10 stellt den rohgasseitigen Strömungsquerschnitt dar. Die Anpassung des Verhältnisses von Einströmfläche 18 zu rohgasseitigem Strömungsquerschnitt kann vorteilhaft abhängig von den Eigenschaften der zu filternden Verunreinigungen und/oder Partikel, und damit beispielsweise abhängig von der Art des zerstäubten Lacktyps beim Einsatz in einer Lackieranlage, und/oder der verwendeten Applikation und/oder der vorherrschenden Luftkonditionen, erfolgen.

Daher ist es vorteilhaft, bei dem erfindungsgemäßen Filtermodul 100 dieses Verhältnis möglichst einfach an die Eigenschaften der abzuscheidenden Partikel adaptieren zu können. Ebenso ist es vorteilhaft, den Aufbau, die Art und die Anzahl der verwendeten Filterlagen 12 möglichst einfach an die Eigenschaften der abzuscheidenden Partikel adaptieren zu können.

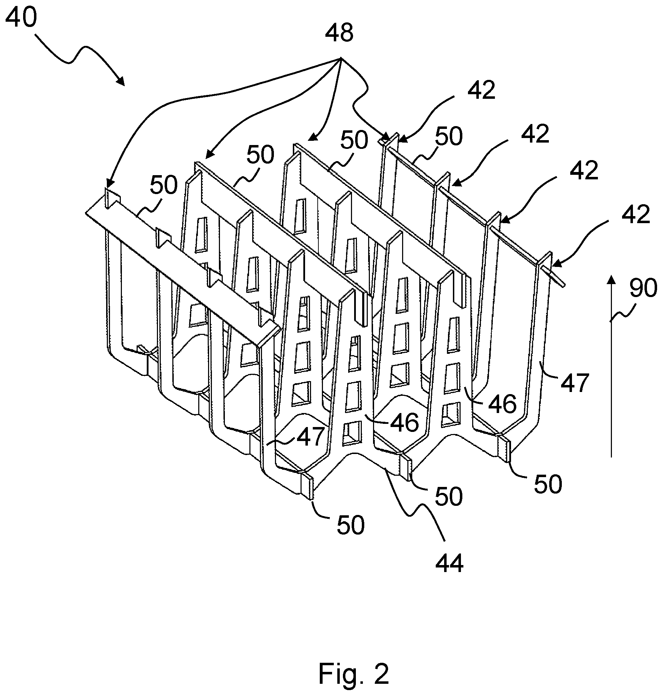

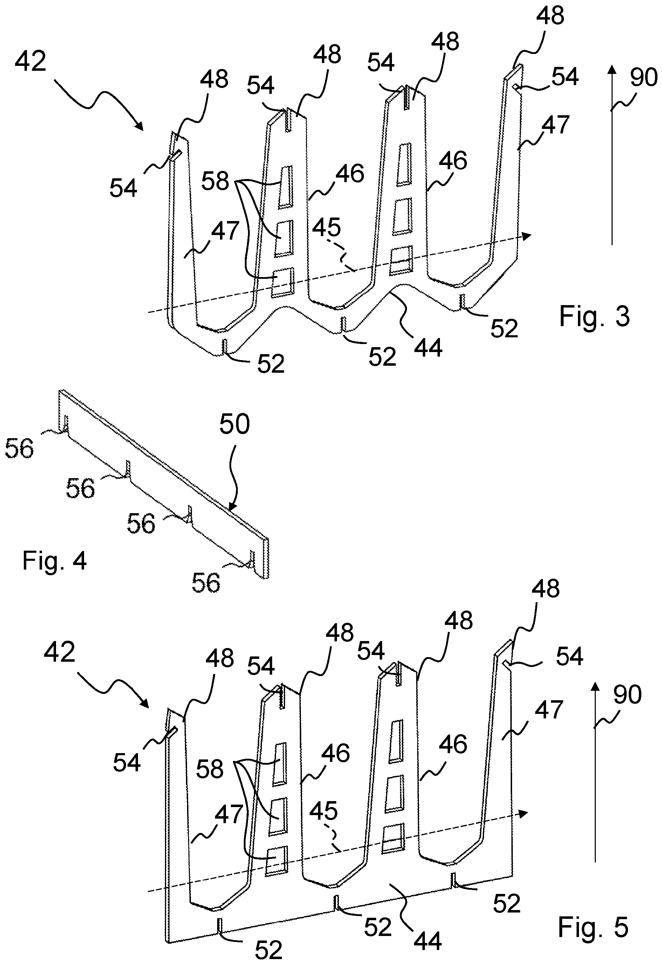

Figur 2 zeigt eine aus mehreren parallel zueinander angeordneten kammartigen Segmenten 42 zusammengesteckte Stützstruktur 40 nach einem Ausführungsbeispiel der Erfindung. Figur 3 zeigt ein einzelnes kammartiges Segment 42 der Stützstruktur 40, und Figur 4 zeigt ein einzelnes Verbindungselement 50 der Stützstruktur 40. Figur 5 zeigt eine Variante eines kammartigen Segments 42.

Die kammartigen Segmente 42 sind flach ausgebildet, mit einer Dicke, die deutlich geringer ist als ihre Länge oder Breite. Durch die geringe Dicke ergibt sich vorteilhaft eine sehr schmale, quasi linienförmige Kontaktfläche mit der Filterlage 12 (Figur 1).

Die Stützstruktur 40 ist dreidimensional ausgebildet und umfasst mehrere kammartige Segmente 42, die deckungsgleich parallel zueinander angeordnet sind und mit Verbindungselementen 50 an ihrer Vorderseite und Rückseite verbunden sind. Die Stützstruktur 40 bildet eine Art dreidimensionales Gerüst für eine Filterlage 12 (Figur 1).

Die Verbindungselemente 50 sind in Schlitze 52 an der Außenkante der Basis 44 und in Schlitze 52 an den basisfernen Enden der Zinken 46, 47 eingesteckt. Die Verbindungselemente 50 weisen hierzu ebenfalls Schlitze 56 auf, wie in Figur 4 ersichtlich.

Jedes kammartige Segment 42 weist eine durchgehende Basis 44 entlang einer Längserstreckung 45 auf, von der voneinander beabstandete Zinken 46, 47 gemeinsam in eine Richtung 90 abstehen. Die Richtung 90 kann beispielsweise der Hauptdurchströmungsrichtung des Filtermoduls 100 (Figur 1) entsprechen.

Die inneren Zinken 46 und die äußere Zinken 47 verjüngen sich in ihrer Breite mit zunehmendem Abstand von der Basis 44, so dass Zwischenräume zwischen den Zinken 46, 47 an der Basis schmaler sind als an basisfernen Enden 48 der Zinken 46, 47.

Die inneren Zinken 46 weisen entlang ihrer Längserstreckung in Richtung 90 nicht näher bezeichnete Durchbrüche auf. Ist die Stützstruktur 40 auf der Rohgasseite des Filtermoduls 100 (Figur 1) angeordnet, erlauben die Durchbrüche ein Abfließen von aus dem Fluid abgeschiedenen Verunreinigungen, etwa Lackpartikeln unter Wirkung der Schwerkraft, wenn die Wellen der Filterlage 12 (Figur 1) m Betriebszustand vertikal ausgerichtet sind. Die äußeren Zinken 47 weisen in diesem Beispiel keine derartigen Durchbrüche auf. Optional können jedoch auch hier Durchbrüche vorgesehen sein.

Optional kann vorgesehen sein, dass die äußeren Zinken 47 zueinander parallele Außenkanten aufweisen.

Sind die Wellen im Betriebszustand horizontal ausgerichtet, erlauben die Durchbrüche eine horizontale Strömung des Fluids im Wellenzwischenraum.

Wird die Filterlage 12 (Figur 1) in die Stützstruktur 40 eingelegt, verläuft diese wellenförmig entlang der Längsrichtung 45 der Basis 44. Die Auslegerichtung der Filterlage 12 (Figur 1) ist in Längsrichtung 45 der Basis 44.

Figur 3 zeigt eine Variante des kammartigen Segments, bei dem die Außenkante der Basis 44 wellenförmig ausgebildet ist. Bei vertikaler Ausrichtung der Wellen des Filterstrukturkörpers 10 im Betriebszustand wird ein Herablaufen von abgeschiedenem Lack im Filterinneren ermöglicht.

Figur 5 zeigt eine Variante eines Segments 42 mit gerader Außenkante der Basis 44.

Vorzugsweise ist jeweils ein Verbindungselement 50 der Stützstruktur 40 mittig vor jedem Wellenberg und in jedem Wellental so angeordnet, dass es dort die Filterlage 12 (Figur1) linienförmig parallel zur Wellenausrichtung abstützt.

Zusätzlich können an den beiden parallel zu den Wellen verlaufenden Seiten der äußeren Zinken 47 Verbindungselemente 50 vorgesehen sein, die eine linienförmige Klemmung der Filterlage 12 gegen die entsprechenden inneren Seitenflächen des Rahmens 110 ermöglichen. Diese Klemmung dient der Fixierung der Filterlage 12 (Figur 1) und der Abdichtung zwischen Filterlage 12 und Rahmen 100.

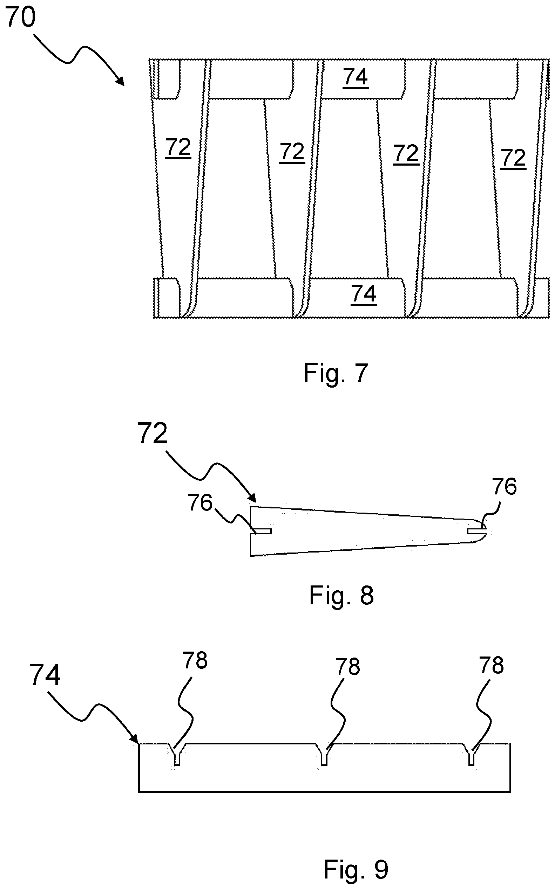

Figur 6 zeigt in perspektivischer Darstellung einen Filterstrukturkörper 10 mit einer in eine Stützstruktur 40 eingelegten und mittels dreier Fixierstrukturen 70 darin festgeklemmten Filterlage 12 nach einem Ausführungsbeispiel der Erfindung. Figuren 7, 8 und 9 illustrieren Details einer Fixierstruktur 70, wobei Figur 7 die aus mehreren Komponenten zusammengesteckte Fixierstruktur 70 zeigt, Figur 8 ein keilförmiges Fixierelement 72 der Fixierstruktur 70 und Figur 9 ein Verbindungselement 74 der Fixierstruktur 70 nach Figur 7 zeigt.

Jede Fixierstruktur 70 in Figur 6 weist vier Fixierelemente 72 auf und ist vorzugsweise in analoger Weise gerüstartig aufgebaut wie die gerüstartige Stützstruktur 40 (Figur 2). Es ist in Figur 6 nur das vordere Fixierelement 72 mit einem Bezugszeichen beziffert. Die Fixierstruktur 70 weist deckungsgleich parallel zueinander angeordnete Fixerelemente 72 in Form von Klemmkeilen auf, die an den jeweiligen freien Enden der Fixierelemente 72 mittels Verbindungselementen 74 miteinander verbunden sind. Die Verbindungselemente 74 weisen vorzugsweise äquidistante Einschnitte 78 auf, die in Einschnitte 76 der Verbindungselemente 74 eingesteckt sind.

Wie in Figur 6 besonders gut erkennbar ist, sind die Fixierelemente 72 vorzugsweise keilförmig, beispielsweise als dreiecksförmige oder trapezförmige flache Flächenelemente ausgebildet, deren Form der freien Querschnittsfläche der Zwischenräume der eingelegten Filterlage 12 entspricht, mit dazu orthogonal angeordneten Verbindungselementen 50.

Die Filterlage 12 ist zwischen der Stützstruktur 40 und den Fixierstrukturen 70 eingeklemmt und verläuft wellenförmig entlang der Längserstreckung 45 der Basis 44 der Stützstruktur 40, wobei, von der Basis 44 her gesehen, an der Basis 44 Wellenberge 30 und an der gegenüberliegenden Seite des Filterstrukturkörpers 10 Wellentäler 32 durch die Filterlage 12 ausgebildet sind.

Die Filterlage 12 kann einlagig sein oder aus mehreren hintereinander eingelegten Lagen gebildet sein. In Figur 6 sind zwei Lagen, eine vordere, zuerst durchströmte Lage 13 und eine weitere Lage 14 dargestellt.

Die Auswahl der zwei oder mehr Lagen erfolgt im Einzelfall anhand der Prozessanforderungen, wobei stets ein möglichst guter Kompromiss aus Abscheideeffizienz und Speichervermögen gesucht werden kann.

Die Prozessanforderungen ergeben sich insbesondere aus den Eigenschaften der abzuscheidenden Overspraypartikel, wie Größenverteilung, rheologische Eigenschaften Viskosität und Oberflächenspannung, sowie der Overspraykonzentration im Rohfluid, insbesondere Rohgas, und Reinheitsanforderungen an das Reinfluid, insbesondere Reingas.

Vorgesehen ist für die Oversprayabscheidung insbesondere der Einsatz von mehrlagigen Filterlagen 12 aus geschlitzten Papierbahnen, Polyestervlies oder Glasfasermaterial. Optional sind bei Bedarf andere Filtervliese, Filtergewebe, Filterpapiere sowie Matten aus anderen Fasermaterialien wie beispielsweise Kokosfasern möglich.

Für die Anordnung hintereinander angeordneter Lagen kommen insbesondere unterschiedlich grobe Materialien in Frage. Vorzugsweise ist als vordere, zuerst durchströmte Lage eine Filtermatte mit relativ geringer Abscheideeffizienz eingesetzt, die dafür aber ein hohes Speichervolumen für abgeschiedenen Lack bietet. Dahinter kann eine feine Filtermatte angeordnet, die eine höhere Abscheideeffizienz aufweist, dafür aber in Regel auch ein geringes Speichervolumen bietet.

Eine Seite der Filterlage 12 stellt eine Einströmfläche 18 und die gegenüberliegende Seite der Filterlage 12 eine Ausströmfläche 22 dar.

Einströmbereiche 20 der Einströmfläche 18 sind entlang von Außenkanten der Zinken 46, 47 von der Basis 44 bis zu basisfernen Enden 48 der Zinken 46, 47 ausgebildet. Auf der dieser gegenüberliegenden Seite der Filterlage 12 erstrecken sich Ausströmbereiche 24 der Ausströmfläche 22 jeweils entsprechend entlang der Außenkanten der Zinken 46, 47 und werden mittels der Fixierelemente 72 fixiert. Vorteilhaft legen die Fixierelemente 72 mit ihren Außenkanten dort an der Filterlage 12 an, wo auf der Einströmseite 18 die Außenkanten der Zinken 46, 47 anliegen.

Die einzulegende Filterlage 12 kann vorzugsweise in einem Stück vorliegen. Alternativ kann die Filterlage 12 insbesondere in der Länge entlang der Basis 44 auch aus mehreren Teilstücken zusammengesetzt sein, die nebeneinander in die Stützstruktur 40 eingelegt werden. In diesem Fall ist auf eine ausreichende Überlappung der Teilstücke zu achten, so dass eine durchgängig geschlossene Einströmfläche 18 und/oder Ausströmfläche 22 gewährleistet ist.

Die Gesamtlänge der Filterlage 12 ist vorzugsweise so bemessen, dass die Wellenkontur in der Stützstruktur 40 vollständig ausgelegt werden kann und an beiden Enden ausreichend Länge übrig ist, dass die Filterlage 12 beidseitig einen Überstand 34 aufweist. Der Überstand 34 kann über die äußeren Zinken 47 der Stützstruktur 40 so umgeschlagen werden, dass sie beim Einschieben in den Rahmen 110 (Figur 1) zwischen dem Filterstrukturkörper 10 und Innenwänden des Rahmens 110 sicher geklemmt wird.

Die Breite der Filterlage 12 ist vorzugsweise so bemessen, dass diese an ihren Längsseiten beidseitig über die Stützstruktur 40 hinaus reicht. Dieser Überstand 36 (Figur 6) kann beim Einschieben in den Rahmen 110 gegen zwei gegenüberliegende Innenseiten des Rahmens 110 gedrückt werden, so dass eine Abdichtung zwischen dem Filterstrukturkörper 10 und dem Rahmen 110 erreicht wird. Ein günstiger Überstand 36 beträgt etwa 1 cm bis 10 cm, vorzugsweise etwa 5 cm.

Auf diese Weise kann der Filterstrukturkörper 10 verbindungsmittelfrei in dem äußeren Rahmen 110 fixiert werden. Insbesondere kann Filterstrukturkörper 10 formschlüssig in dem äußeren Rahmen 110 fixiert werden.

Vorteilhaft kann der Filterstrukturkörper 10 aus einem Bausatz hergestellt sein.

Der Bausatz kann vorzugsweise eine Mehrzahl von nur drei verschiedenen Bauteilen, insbesondere Wellpappe-Bauteilen, als Flächenzuschnitte umfassen, nämlich kammartige Segmente 42 für die Stützstruktur 40 (Figuren 2, 3, 4, 5), näherungsweise trapezförmige flächige Fixierelementen 72 und Verbindungselemente 50, 74 (Figuren 7, 8, 9), die für die Stützstruktur 40 und die Fixierstruktur 70 vorzugsweise identisch sein können.

Die Bausätze für zwei bevorzugte Ausführungsformen, Beispiel 1 und Beispiel 2, umfassen beispielsweise folgende Bauteile:
In Beispiel 1 sind für einen Filterstrukturkörper 10 mit Stützstruktur 40 und Fixierstruktur 70 mit einer beispielhaften Einströmfläche von ca. 0,5 m x 0,5 m und einer Tiefe von ca. 0,5 m (Abstand zwischen Einströmöffnung 112 und Ausströmöffnung) vorgesehen:
vier kammartige Segmente 42, zwölf näherungsweise trapezförmige Fixierelemente 72 für drei Fixierstrukturen 70 mit je vier Klemmkeilen, dreizehn identische Verbindungselemente 50, 74, nämlich sieben für die Stützstruktur 40 und je zwei für die drei Fixierstrukturen 70.

Die Verbindungselemente 50, 74 für Stützstruktur 40 und Fixierstruktur 70 sind identisch.

Vorteilhaft kann der Filterstrukturkörper 10 aus Wellpappe gebildet sein und in einen näherungsweise würfelförmigen Umkarton als Rahmen 110 mit einer Kantenlänge von ca. 0,5 m eingeführt werden.

Der Filterstrukturkörper 10 ist so gestaltet, dass durch die eingelegte Filterlage 12 drei ganze Wellenberge 30 (Figur 6) ausgebildet werden, so dass die nutzbare Einströmfläche 18, welche die nutzbare Filterfläche darstellt, damit näherungsweise 1,5 m² beträgt, bei sechs Wellenflanken zu je 0,25 m².

Vorteilhaft besteht der Bausatz aus Wellpappe-Stanzteilen mit einer Dicke von vorzugsweise 5 bis 8 mm.

In Beispiel 2 sind für einen Filterstrukturkörper 10 mit Stützstruktur 40 und Fixierstruktur 70 mit einer beispielshaften Einströmfläche von ca. 0,5 m x 0,5 m und einer Tiefe von ca. 0,3 m (Abstand zwischen Einströmöffnung 112 und Ausströmöffnung) vorgesehen:
drei kammartige Segmente 42, fünfzehn näherungsweise trapezförmige Fixierelemente 72 für drei Fixierstrukturen 70 mit je fünf Klemmkeilen, dreizehn identische Verbindungselemente 50, 74, nämlich sieben für die Stützstruktur 40 und je zwei für die drei Fixierstrukturen 70.

Die Verbindungselemente 50, 74 für Stützstruktur 40 und Fixierstruktur 70 sind identisch.

Vorteilhaft kann der Filterstrukturkörper 10 aus Wellpappe gebildet sein und in einen Umkarton als Rahmen 110 mit einer näherungsweise quadratischen Einströmfläche und einer Kantenlänge von ca. 0,5 m und einer Tiefe von näherungsweise 0,3 m (in Durchströmungsrichtung gemessen), eingeführt werden.

Der Filterstrukturkörper 10 ist so gestaltet, dass durch die eingelegte Filterlage 12 drei ganze Wellenberge 30 ausgebildet werden, so dass die nutzbare Einströmfläche 18 damit näherungsweise 0,9 m² bei sechs Wellenflanken zu je 0,15 m² beträgt.

Vorteilhaft besteht der Bausatz aus Wellpappe-Stanzteilen mit einer Dicke von vorzugsweise 5 bis 8 mm.

In einem Anwendungsfall kann der Filterstrukturkörper 10 beispielsweise als Grobabscheider eingesetzt werden, beispielsweise mit einer mehrlagigen Filterlage aus geschlitztem Papier.

Stützkörper 40 und Fixierstruktur 70 sind vorzugsweise nach Beispiel 2 gebildet. Als Filterlage 12 ist eine mehrlagige Papierbahn aus unterschiedlich geschlitztem Papier in die Stützstruktur 40 eingelegt. Die Filterlage 12 umfasst vorzugsweise fünf bis zehn, (insbesondere acht) Lagen aus geschlitztem Papier, wobei vorzugsweise jeweils zwei bis drei unmittelbar aneinander liegende Lagen dieselbe Schlitzung aufweisen.

Der so aufgebaute Grobabscheider kommt vor einer Feinfilterstufe zum Einsatz, der vorzugsweise analog, jedoch mit einer entsprechend feineren Filterlage 12 aufgebaut sein kann.

In einem weiteren Anwendungsfall kann der Filterstrukturkörper 10 beispielsweise als Feinfilterstufe eingesetzt werden, beispielsweise mit einer Feinfiltermatte aus Polyestervlies oder Glasfasermaterial als Filterlage. Die Feinfilterstufe kann als Nachfilter hinter einem Grobabscheider zum Einsatz kommen, der beispielsweise nach dem Trägheitsprinzip arbeitet.

Stützkörper 40 und Fixierstruktur 70 sind vorzugsweise nach Beispiel 2 gebildet. Als Filterlage 12 ist ein Filtervlies oder eine Glasfasermatte in die Stützstruktur 40 eingelegt. Vorzugsweise handelt es sich um ein Vlies, das zur Vergrößerung der Aufnahmekapazität wabenförmige Vertiefungen aufweist.

Der so aufgebaute Feinabscheider ist insbesondere als zweite Filterstufe hinter einem Grobabscheider vorgesehen, der wie vorstehend beschrieben ausgebildet sein kann, bei dem der Filterstrukturkörper 10 beispielsweise eine mehrlagige Filterlage 12 aus geschlitztem Papier aufweist und Stützkörper 40 und Fixierstruktur 70 vorzugsweise nach Beispiel 2 gebildet sind.

Alternativ kann insbesondere ein Grobabscheider vorgesehen sein, der nach dem Trägheitsprinzip durch gezielte Beschleunigung des Gasstroms auf eine Abschlagfläche arbeitet, wobei die Strömung entlang der Abschlagfläche um mindestens 180° umgelenkt wird und anschließend entlang einer Führungskontur um mindestens 180° rückumgelenkt wird.

In diesem alternativen Anwendungsfall kommt der Filterstrukturkörper 10 vorzugsweise mit horizontal ausgerichteten Wellen zum Einsatz, um eine horizontale Strömung in den Wellenzwischenräumen zu ermöglichen.

Die Feinfilterstufe kann abweichend von der Ausführung nach Beispiel 2 auch mit dem Grobabscheider in einem gemeinsamen Umkarton als Rahmen angeordnet sein.

In einem weiteren Anwendungsfall kann ein Einsatz als kombinierter Grob- und Feinabscheider vorgesehen sein. Vorteilhaft ist die Stützstruktur 40 und Fixierstruktur 70 nach Beispiel 1 gebildet, wobei in die Stützstruktur 40 für die Grobabscheidung eine mehrlagige Papierbahn aus unterschiedlich geschlitztem Papier sowie unmittelbar dahinter für die Feinabscheidung eine Feinfiltermatte aus Polyestervlies eingelegt sind.

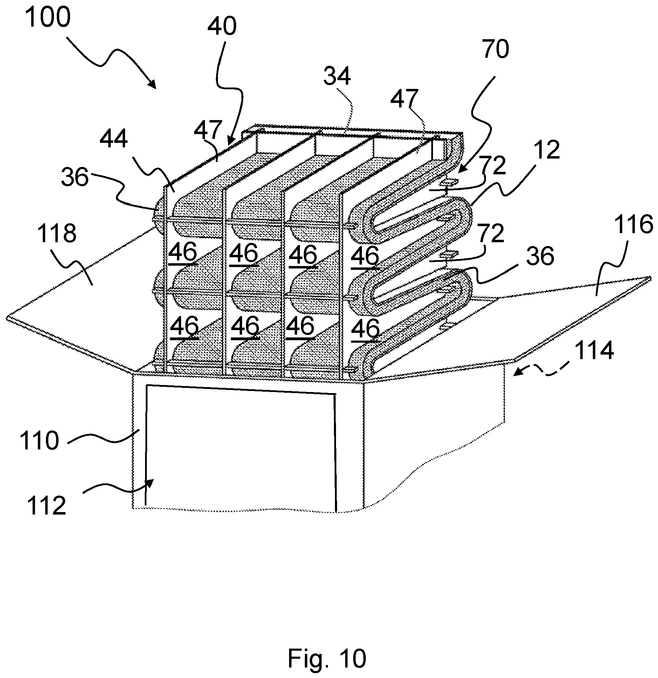

Ein vorteilhaftes Verfahren zur Herstellung eines Filterstrukturkörpers 10 weist vorzugsweise folgenden Ablauf auf, der in Figur 10 im Endstadium des Zusammenbaus angedeutet ist, bei dem ein Filterstrukturkörper 10 in einen beispielsweise als Umkarton ausgebildeten Rahmen 110 eingesetzt wird. Der Filterstrukturkörper 10 weist entlang der Längsseiten und der Querseiten der Stützstruktur 40 je einen Überstand 36, 34 auf. Der Filterstrukturkörper 10 wird durch eine Einführöffnung des Rahmens 110 eingeschoben, die durch geöffnet gezeichnete Klappen 116, 118 freigegeben wird, und die nach Einbau des Filterstrukturkörpers 10 den Rahmen 110 verschließen.

In einem ersten Schritt erfolgt das Zusammenstecken der Stützstruktur 40 aus kammartigen Segmenten 42 und Verbindungselementen 50.

In einem weiteren Schritt erfolgt das Zusammenstecken der Fixierstrukturen 70 aus den trapezförmigen Fixierelementen 72 und Verbindungselementen 74.

In einem weiteren Schritt erfolgt das Bereitstellen der Stützstruktur 40 mit wellenförmiger Negativkontur nach oben.

In einem weiteren Schritt erfolgt das Einlegen der Filterlage 12 in die wellenförmige Negativkontur der Stützstruktur 40. Bei mehrlagigen Filterlagen können die Lagen nacheinander eingelegt werden. Die Filterlage 12 wird so eingelegt, das am Anfang und am Ende der Filterlage 12 ein Überstand 34 über die Stützstruktur 40 verbleibt.

In einem weiteren Schritt erfolgt das Einstecken der Fixierstrukturen 70 in die Zwischenräume der eingelegten Filterlage 12.

In einem weiteren Schritt erfolgt das Umfalten der an den vorderen und hinteren Enden der Fiterlage 12 überstehenden Überstände 34 und Einschieben des Filterstrukturkörpers 10 mit eingelegter Filterlage 12 in den Rahmen 110.

In einem weiteren Schritt erfolgt das Verschließen des Rahmens 110. Hierzu werden die Klappen 116, 118 geschlossen.

Das erfindungsgemäße Filtermodul 100 und der erfindungsgemäße Filterstrukturkörper 10 weisen eine Vielzahl von Vorteilen auf.

Durch formstabile Stützstruktur 40 und Fixierstruktur 70 ist der Aufbau äußerst steif, ein Einknicken oder Zusammensacken der Wellenstruktur wird auch bei hoher Lackbeladung der Filterlage 12 sicher vermieden.

Es gelingt eine gute Ausnutzung der Einströmfläche 18 und/oder Ausströmfläche 22, da diese nur linienförmig und nicht flächig von der Stützstruktur 40 und der Fixierstruktur 70 verdeckt wird.

Ein vorzeitiges Zusetzen der Einströmöffnungen in die Wellenzwischenräume kann vermieden werden, da keine parallel zu den Wellen angeordneten Bauteile die lichte Breite der Öffnungen vermindern. So gelingt eine verbesserte Tiefenbeladung. Die Einströmflächen 18 und Ausströmflächen 22 sind nicht ausbauchend. Es gelingt eine verbesserte Strömungsführung in Wellenzwischenräume.

Die Stützstruktur 40 bietet Abschlagflächen vor den Filterlagen 12 insbesondere in Form der Verbindungselemente 50 (Figur 6), der Basis und der Zinken 46, 47 der kammartigen Segmente 42 der Stützstruktur 40, an denen sich Lack niederschlagen kann, ohne die Filterlage 12 zuzusetzen.

Vorteilhaft ergeben sich eine erhöhte Abscheideeffizienz und Flexibilität bei der Verwendung. Es gelingt eine sichere Vermeidung von Schlupf innerhalb des die wenigstens eine Filterstruktur umgebenden Rahmens 110 durch umlaufende Klemmung der Filterlagen 12 zwischen Stützstruktur 40 und Rahmen 110.

Es sind beliebige Filtermaterialien für die einlagige oder mehrlagige Filterlage 12 einsetzbar, z.B. Papiergelegebahnen, Polyestervlies, Feinfiltervlies, Glasfasermatte. Das Filtermodul 100 kann sehr einfach an verschiedene Anwendungsfälle angepasst werden.

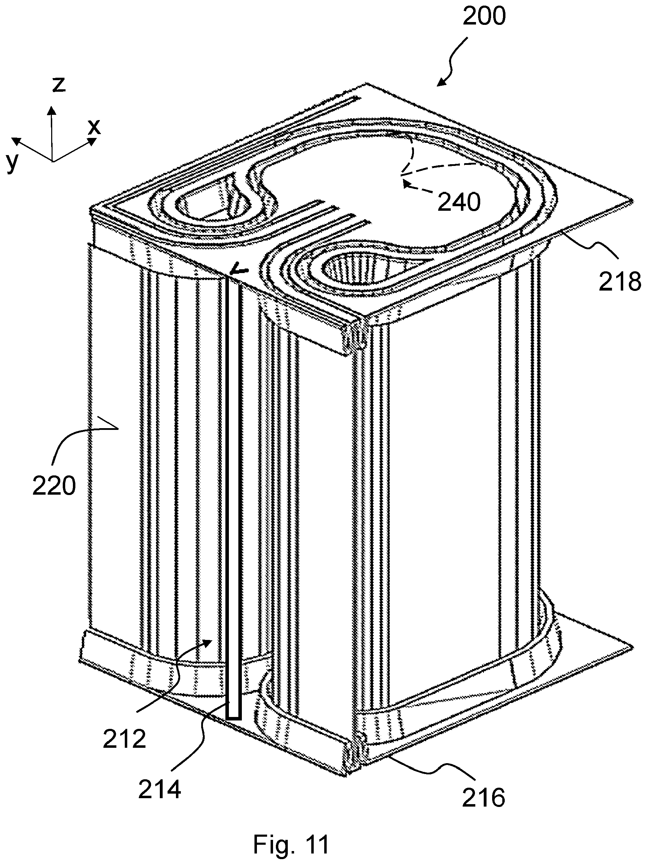

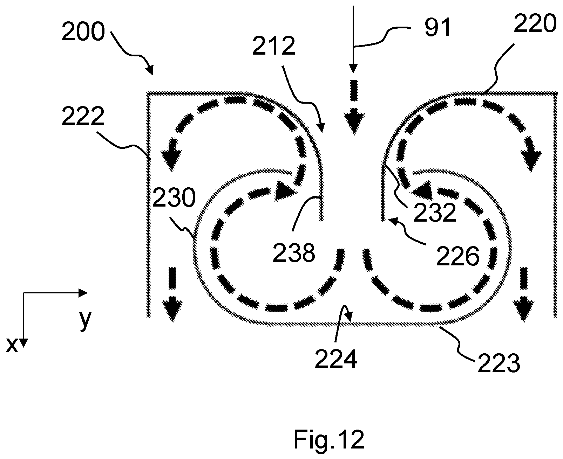

Ein vorteilhafter Grobabscheider 200, der nach dem Trägheitsprinzip mit gezielter Beschleunigung des Gasstroms auf eine Abschlagfläche hin arbeitet, ist in Figur 11 dargestellt. Figur 12 zeigt die Funktionsweise anhand eines Querschnitts durch den Grobabscheider 200.

Der Grobabscheider 200 arbeitet nach dem Trägheitsprinzip durch gezielte Beschleunigung des Gasstroms auf eine Abschlagfläche, wobei die Strömung entlang der Abschlagfläche um 180° umgelenkt wird und anschließend entlang einer Führungskontur um mindestens 180° rückumgelenkt wird.

Der Grobabscheider 200 weist eingangsseitig eine Anströmfläche 220 und eine Beschleunigungsstrecke 212 auf, beispielsweise eine Düse, die in die Tiefe des Grobabscheiders 200 weist, gefolgt von einer ersten Abschlagfläche 223 mit Fluidstromumlenkung an einem ersten gekrümmten Abschnitt 239. Die Anströmfläche 220 bildet eine Querschnittsfläche vor der Beschleunigungsstrecke 212.

Zur Orientierung ist ein Koordinatenkreuz x, y angegeben. Die x-Achse entspricht einer Längsachse, die vorzugsweise eine Hauptdurchströmungsrichtung 91 der Beschleunigungsstrecke 212 ist. Die y-Achse entspricht in diesem Beispiel einer Querachse, entlang der die Anströmfläche 220 und ein freier Strömungsquerschnitt am Eintritt des Fluids in die Beschleunigungsstrecke 212 angeordnet sind. Die z-Achse ist senkrecht zur Bildebene gerichtet und entspricht in diesem Beispiel einer Hochachse des Grobabscheiders 200. Die Beschleunigungsstrecke 212 ist in Richtung der y-Achse als Schlitz ausgebildet, der sich zwischen Bodenteil 216 und Deckelteil 218 des Grobabscheiders 200 erstreckt.

In diesem Ausführungsbeispiel ist der Grobabscheider 200 durch ein einzelnes Abscheidesegment gebildet. Optional können zwei oder mehr Abscheidesegmente nebeneinander vorgesehen sein, von denen jedes eine Beschleunigungsstrecke 212 und eine Anströmfläche 220 aufweist.

Der Fachmann versteht, dass die y-Achse die Hochachse und die z-Achse die Querachse bilden würde, wenn die Abscheidestufe 100 beispielsweise um 90° um die x-Achse gedreht würde.

Als Querschnittsfläche ist die Querschnittsfläche des Abscheidesegments senkrecht zu einer Hauptdurchströmungsrichtung 91 zu verstehen.

Die Hauptdurchströmungsrichtung 91 ist als gedachte gerade Verbindung zwischen Eingangsseite und Ausgangsseite des Grobabscheiders 200 zu verstehen. Die Fluidströmung tritt an der Eingangsseite in den Grobabscheider 200 ein und an der Ausgangsseite, welche in diesem Beispiel der Eingangsseite gegenüberliegt, wieder aus, unabhängig davon, ob im Innern des Grobabscheiders 200 eine oder mehrere Richtungsumkehrungen erfolgen.

Die Anströmfläche 220 geht in die Wandung der Beschleunigungsstrecke 212 über. Die Beschleunigungsstrecke 212 ist mit ihrem offenen Ende 226 auf einen im Abstand quer dazu angeordneten Prallbereich 224 der ersten Abschlagfläche 223 gerichtet. Der Prallbereich ist hier eben dargestellt. Optional kann dieser auch eine zur Beschleunigungsstrecke 212 hin weisende Spitze 240 aufweisen, wie in Figur 11 durch eine unterbrochene Linie im Deckelteil 218 des Grobabscheiders 200 angedeutet ist.

Dem gekrümmten Abschnitt 230 der ersten Abschlagfläche 223 folgt eine zweite Abschlagfläche 238 mit entgegengesetzter Fluidstromumlenkung an einem weiteren, zum ersten entgegengesetzt gekrümmten Abschnitt 232. Die Fluidströmung ist mit geraden und gerundeten dicken Pfeilen angedeutet.

Das Fluid, beispielsweise ein Gemisch aus Luft und Lackpartikeln und Lack-Agglomeraten aus einer Lackieranlage, trifft auf die Anströmfläche 220 und tritt in einer Durchströmungsrichtung in Richtung der x-Achse in die Beschleunigungsstrecke 212 des Grobabscheiders 200 ein. Hierbei wird vereinfacht vernachlässigt, dass durch den gerundeten Verlauf der Beschleunigungsstrecke 212 am Eintritt des Fluids in die Beschleunigungsstrecke 212 der Teil des Fluids, der auf die Anströmfläche 220 trifft, eine Ablenkung in die Beschleunigungsstrecke 212 hinein erfährt..

Die eintretende Fluidströmung wird symmetrisch zur Längsrichtung der Beschleunigungsstrecke 212 in Querrichtung zu beiden Seiten in zwei entgegengesetzt voneinander weg strömende Teilströme aufgeteilt und vom Ende 226 der Beschleunigungsstrecke 212 nach außen weggelenkt. Auf den in diesem Beispiel ebenen dargestellten Prallbereich 224 gegenüber der Beschleunigungsstrecke 212 folgt zu beiden Seiten der gleichmäßig mit einem Radius gekrümmte Abschnitt 230 der ersten Abschlagfläche 223.

Die Endkante des gekrümmten ersten Abschnitts 230 ist auf die zweite Abschlagfläche 232 gerichtet, die ebenfalls einen gekrümmten Abschnitt aufweist. Die zweite Abschlagfläche 232 ist vorteilhaft durch die Außenseite der Beschleunigungsstrecke 212 gebildet.

Das eintretende Fluid wird in der Beschleunigungsstrecke 212 beschleunigt und nach dem Prallbereich 224 auf der linken Seite der Figur entsprechend der Krümmung des gekrümmten Abschnitts 230 im Uhrzeigersinn und auf der gegenüberliegenden rechten Seite im Gegenuhrzeigersinn umgelenkt. Die Umlenkung beträgt mindestens 45°, vorzugsweise mehr als 180°, hier 270°, gegenüber der Durchströmungsrichtung. Die Umlenkung um mehr als 180° erhöht die Wahrscheinlichkeit eines Wandkontakts für die Partikel in der Fluidströmung, so dass die Abscheideeffizienz erhöht wird.

An der zweiten Abschlagfläche 238, die mit einem Eintrittsbereich quer zum ersten gekrümmten Abschnitt 230 angeordnet ist, wird der Fluidstrom weiter umgelenkt.

Der gekrümmte Abschnitt der zweiten Abschlagfläche 238 ist entgegen dem ersten gekrümmten Abschnitt 230 der ersten Abschlagfläche 223 gekrümmt. Der Fluidstrom wird dort weiter auf der linken Seite in der Figur in Gegenuhrzeigersinn und auf der rechten Seite der Figur im Uhrzeigersinn umgelenkt, so dass der Fluidstrom am Beginn der Abschlagfläche entgegen der ursprünglichen Durchströmungsrichtung in der Beschleunigungsstrecke 212 strömt und schließlich an einer Begrenzungswand 222 weiter in Richtung der x-Achse umgelenkt wird. Die beiden Teilströme verlassen den Grobabscheider 200 in der ursprünglichen Durchströmungsrichtung 91.

Partikel aus dem Fluid können sich durch die Umlenkung an den gekrümmten Abschnitten 230, 232 herrschenden Fliehkräften leicht an den gekrümmten Abschnitten 230, 232 ablagern. Partikel, die sich nach der ersten Umlenkung an der ersten Abschlagfläche 223 entfernt von dieser in der Fluidströmung befinden, kommen bei der zweiten Umlenkung an der zweiten Abschlagfläche 238 zwangsläufig in die Nähe der zweiten Abschlagfläche 238 und können sich dort leicht anlagern und somit aus dem Fluidstrom entfernt werden.

Der Grobabscheider weist vor der schlitzartigen Beschleunigungsstrecke 212 ein Leitelement 214 auf, das lösbar vorgesehen sein kann. Das Leitelement 214 erstreckt sich in einer Symmetrieebene des freien Strömungsquerschnitts am Eintritt des Fluids in die Beschleunigungsstrecke 212 vom Bodenteil 216 bis zum Deckelteil 218 entlang der Hochachse z. Das Leitelement 214 weist in diesem Beispiel eine Ausdehnung auf, welche parallel zur z-Achse ist.

Das Leitelement 214 ist in diesem Beispiel gegen die Strömungsrichtung spitz zulaufend ausgebildet mit einem beispielsweise V-förmigen Querschnitt. Das Leitelement 214 kann zur Geräuschminimierung bei der Durchströmung des Grobabscheiders 200 dienen. Das Leitelement 214 kann die Durchströmung so beeinflussen, dass eine Geräuschentwicklung reduziert oder weitgehend unterdrückt werden kann.

Durch geeignete Positionierung und/oder Formgebung des Leitelements 214 kann dieses eine Verwirbelung des einströmenden Fluids, beispielsweise einströmender Luft, und/oder eine Reflexion des hinter der Beschleunigungsstrecke 212 entstehenden Schalls hervorrufen.

Der Grobabscheider 200 kann ebenfalls vollständig aus Stanzteilen aufgebaut sein, die kompakt transportiert und erst vor Ort zum Grobabscheider 200 zusammengebaut werden.

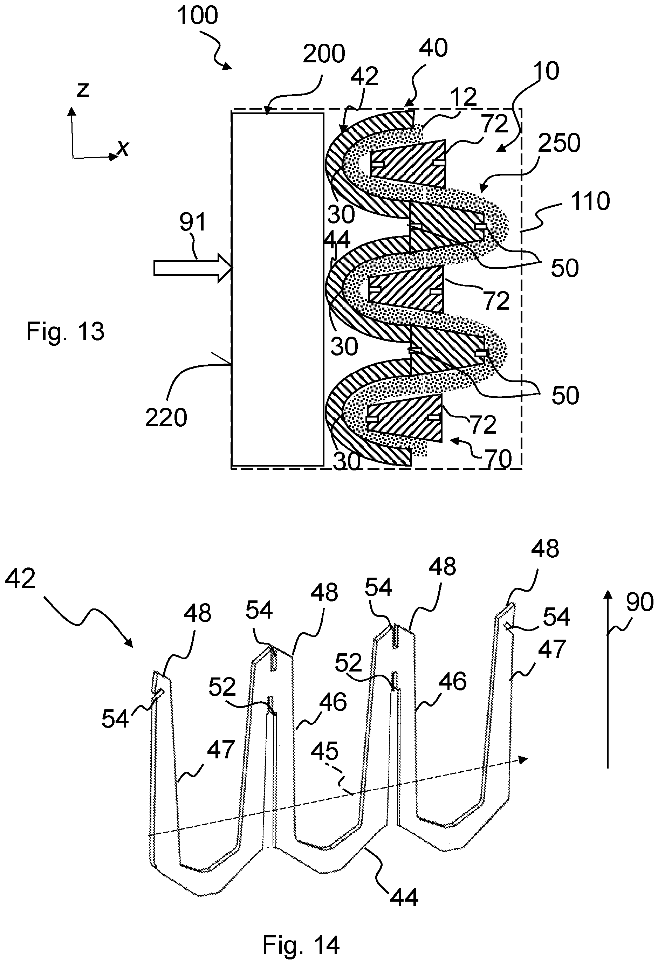

Ein Ausführungsbeispiel eines kombinierten Filtermoduls 100 mit einem Grobabscheider 200 nach Figur 11 mit anschließender Feinfilterstufe 250 ist in Figur 13 mit nur angedeutetem Rahmen 110 dargestellt.

Der Filterstrukturkörper 10 kommt als Feinfilterstufe 250 mit einer Filterlage 12, beispielsweise einer Feinfiltermatte aus Polyestervlies oder Glasfasermaterial oder dergleichen, hinter dem Grobabscheider 200 zum Einsatz.

Der Filterstrukturkörper 10 ist unmittelbar hinter dem Grobabscheider 200 angeordnet und kann in einem gemeinsamen Rahmen 110, beispielsweise einem Umkarton, angeordnet sein. Die kammartigen Segmente 42 der Stützstruktur 40 dienen dabei zugleich der Abstützung gegen die Struktur des Grobabscheiders 200. Die Stützstruktur 40 stützt sich mit der Basis 44 der kammartigen Strukturen 42 an der Austrittseite des Grobabscheiders 200 ab.

Der Filterstrukturkörper 10 kommt dabei vorzugsweise mit horizontal ausgerichteten Wellen der Filterlage 12, d.h. parallel zur Richtung der y-Achse, die in der Figur senkrecht zur Zeichenebene gerichtet ist, zum Einsatz. Diese Orientierung der Wellen ermöglicht eine horizontale Strömung in den Wellenzwischenräumen der Filterlage 12. Mithin liegen die Wellen der Filterlage 12 quer, insbesondere senkrecht, zur schlitzartigen Ausdehnung der Beschleunigungsstrecke 212 des Grobabscheiders 200 (Figur 11).

Würde der Grobabscheider 200 beispielsweise um die x-Achse verkippt, ist es vorteilhaft, die relative Orientierung der Wellen der Filterlage 12 der Feinfilterstufe 250 quer zu der Ausdehnung der Beschleunigungsstrecke 212 zu erhalten.

Der Filterstrukturkörper 10 ist vorzugsweise so dimensioniert, dass die Feinfilterstufe 250 möglichst gleich schnell gesättigt wird wie der Grobabscheider 200. Konkret kann ein ca. 300 mm tiefer Grobabscheider 200 mit einem ca. 200 mm tiefen Filterstrukturkörper 10 kombiniert werden, der ca. 0,7 m² Filterfläche aufweist. Beide können in einem gemeinsamen 500 mm tiefen Umkarton als Rahmen 110 angeordnet werden.

An der Stützstruktur 40 sind im Gegensatz zu dem Ausführungsbeispiel in Figur 1 keine Verbindungselemente 50 vor den Wellenbergen 30 angeordnet, damit ein möglichst geringer Abstand zum Grobabscheider 200 (Figur 11) möglich wird. Stattdessen sind die Verbindungselemente 50 zwischen den kammartigen Segmenten 42 in den Wellentälern angeordnet, wie am kammartigen Segment 42 in Figur 14 erkennbar ist. Dies ist hier möglich, da aufgrund der Vorabscheidung im Grobabscheider 200 nicht mit vorzeitigem Verstopfen der Wellentäler durch übermäßige Lackanhaftung an den Verbindungselementen 50 gerechnet werden muss.

Stützstruktur 40 und Fixierstruktur 70 sind analog zu Beispiel 2 gebildet. Insbesondere kann die Stützstruktur 40 so geformt sein, dass durch die eingelegte Filterlage 12,beispielsweise eine Filtermatte, drei ganze Wellenberge 30 ausgebildet werden. Die Größe der Einströmfläche ca. 0,5 m x 0,5 m, und die Stützstruktur 40 umfasst drei kammartige Segmente 42.

Die Stützstruktur 40 kann neben den kammartigen Segmenten 42 zusätzlich keilförmige, vorzugswies näherungsweise trapezförmige, nicht separat dargestellte Versteifungselemente umfassen, die jeweils in Richtung der y-Achse gesehen mittig zwischen zwei kammartigen Segmenten 42 im Wellental angeordnet sind. Diese dienen der zusätzlichen Abstützung der Filterlage 12, beispielsweise einer Filtermatte, bei horizontaler Ausrichtung der Wellen und verhindern so ein "Durchhängen" dieser Wellen bei zunehmender Lackbeladung. Der Vorteil durch den Einsatz dieser Versteifungselemente anstelle zusätzlicher kammartiger Segmente 42 ist, dass die Versteifungselemente eine horizontale Strömung in den Wellenzwischenräumen weniger behindern.

Vorzugsweise ist die Tiefe des Filterstrukturkörpers 10 bezogen auf die Entfernung zwischen rohseitiger Öffnung 112 und reinseitiger Öffnung 114 des Rahmens 110 (Figur 10) so bemessen, dass die Feinfilterstufe 250 mit dem Filterstrukturkörper 10 nur die halbe Strecke einnimmt. Die Tiefe des Filterstrukturkörpers 10 in Richtung der x-Achse gesehen beträgt beispielsweise nur ca. 200 mm.

Die dargestellte Hintereinanderschaltung von Grobabscheider 200 und Feinfilterstufe 250 Filterlagen 12 erlaubt es, ein hohes Speichervermögen mit einer guten Feinabscheidung, d.h. mit hoher Abscheideeffizienz, zu verbinden.

Ein vorteilhafter Bausatz aus Wellpappe-Stanzteilen für die Stützstruktur 40 umfasst günstigerweise vier zusätzliche, näherungsweise trapezförmige Versteifungselemente pro drei kammartigen Segmenten 42.

Der Vorteil einer hohen Abscheideeffizienz kann auch dadurch erreicht werden, dass (nur) eine Filterlage 12 aus einer feinen Filtermatte eingesetzt wird, die zur Erhöhung des Speichervolumens auf der Anströmseite ihrerseits eine dreidimensional geformte Oberfläche aufweist. Auf diese Weise steht eine größere Oberfläche zur Anlagerung des abgeschiedenen Lacks zu Verfügung, so dass die Filterlage 12 nicht so schnell verstopft. Diese Variante kann weitere Vorteile bieten, wie geringere Materialkosten, geringerer Zusammenbauaufwand für das Filtermodul, da nur eine Filterlage eingelegt werden muss, erhöhte Abscheideeffizienz und Speicherkapazität in bestimmten Anwendungsfällen, insbesondere, wenn die Lackpartikel relativ trocken sind.

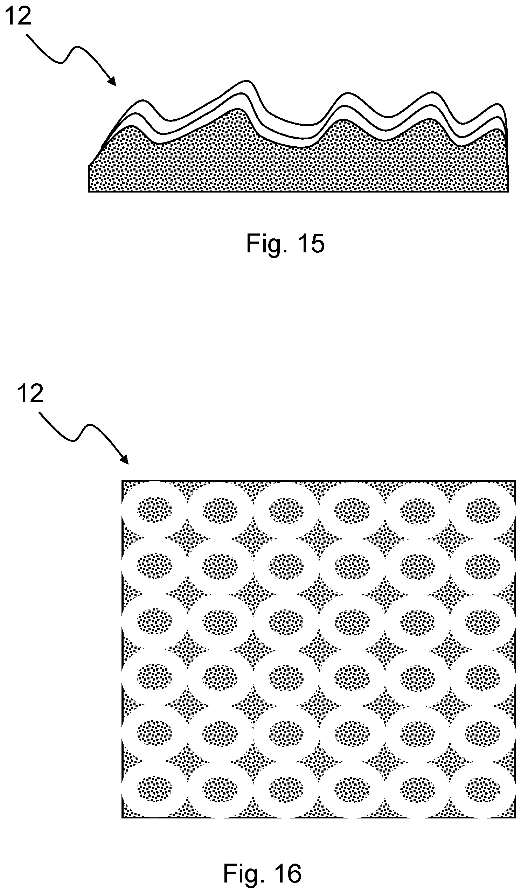

Figuren 15 und 16 zeigen hierfür günstige Filterlagen 12 mit dreidimensional strukturierter Oberfläche, die in Form von Filtermatten gestaltet sein können.

In Figur 15 ist die Filterlage 12 in Seitenansicht dargestellt und zumindest an einer Oberfläche wellig, dreidimensional strukturiert. Dadurch bietet die Filterlage 12 eine vergrößerte Oberfläche. Figur 16 zeigt in Draufsicht eine Filterlage 12, die eine netzartig oder wabenartig strukturierte Oberfläche aufweist.

Die dreidimensionale Oberflächenstruktur der Filterlage 12 kann dabei auf verschiedene Weise erzeugt sein. Beispielsweise kann die Filterlage 12 unterschiedliche Materialdicken aufweisen, so dass eine beispielsweise wellenförmig ausgebildete Oberfläche mit Hoch- und Tiefpunkten entsteht (Figur 15)

Alternativ kann die Filterlage (Figur 16) aus zwei verbundenen Lagen aufgebaut sein, wobei die obere (rohgasseitige) Lage netzartig strukturiert ist und Öffnungen ("Löcher") aufweist, so dass die Oberfläche der Filterlage 12 entsprechende Vertiefungen aufweist. Die Öffnungen in der oberen Lage können dabei beispielsweise durch Schnitte in einer Längsrichtung dieser Lage und Dehnung der Lage in dazu orthogonaler Längsrichtung erzeugt sein. Auf diese Weise entstehen wabenförmige Öffnungen bzw. Vertiefungen in der Filterlage 12. Die beiden Lagen können aus demselben Filtervlies oder aus verschiedenen Filtermaterialien hergestellt sein, die sich beispielsweise durch ihre Faserdurchmesser oder andere Materialeigenschaften unterscheiden können. Vorzugsweise ist die obere Lage etwas gröber als die untere Lage.

Beide Varianten der Filterlage 12 können einerseits für eine Feinfilterstufe in Kombination mit einem vorgeschalteten Grobabscheider 200 wie in Figur 13 eingesetzt werden.

Andererseits können derartige Filterlagen 12 aufgrund der Kombination aus hohem Speichervermögen und hoher Abscheideeffizienz auch als alleiniger Abscheider in Betracht kommen.

Optional können auch mehrere dreidimensional strukturierte Lagen nach Figuren 15 und/oder 16 zu einer Filterlage 12 kombiniert werden, wobei die einzelnen Lagen jedoch nicht verbunden sein müssen. Von den zwei oder mehreren Lagen weist zumindest die rohgasseitige Lage eine dreidimensional strukturierte Oberfläche auf, insbesondere mit Öffnungen. Es können jedoch auch mehrere Lagen mit Öffnungen hintereinander zum Einsatz kommen

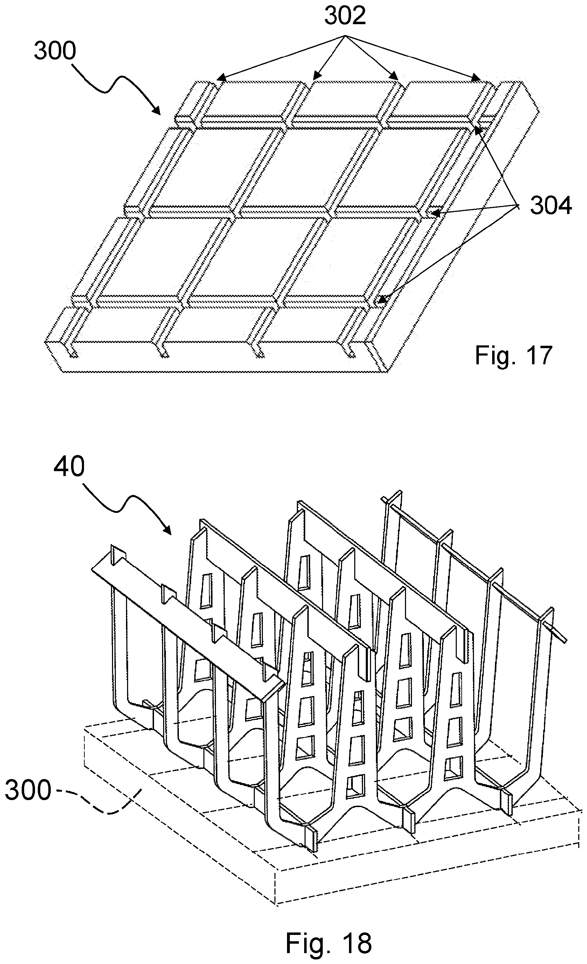

Die Figuren 17 bis 21 zeigen Montagevorrichtungen 300, 310 für den Zusammenbau des Filterstrukturkörpers 40 und des Filtermoduls 100.

Figur 17 zeigt eine Montagevorrichtung 300 zum Aufbau von Stützstruktur 40 und Fixierstruktur 70 eines Filterstrukturkörpers nach der Erfindung, und Figur 18 zeigt schematisch eine Stützstruktur 40 montiert in der Montagevorrichtung 300 nach Figur 17.

In der Montagevorrichtung 300 können die die Einzelteile der Stützstruktur 40 eingesetzt werden, um diese in Position zu halten. Als Montagevorrichtung 300 kann beispielsweise eine Platte mit sich kreuzenden senkrecht zueinander verlaufenden Nuten 302, 304 dienen.

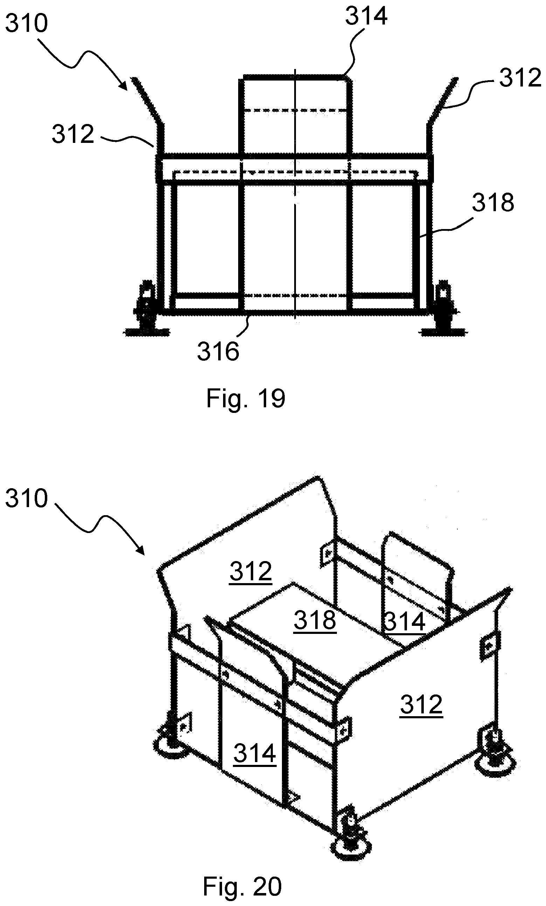

Die Figuren 19 bis 21 zeigen eine Montagevorrichtung 310 zum Einbau eines Filterstrukturkörpers in einen Rahmen 110, der beispielsweise als Umkarton gestaltet sein kann.

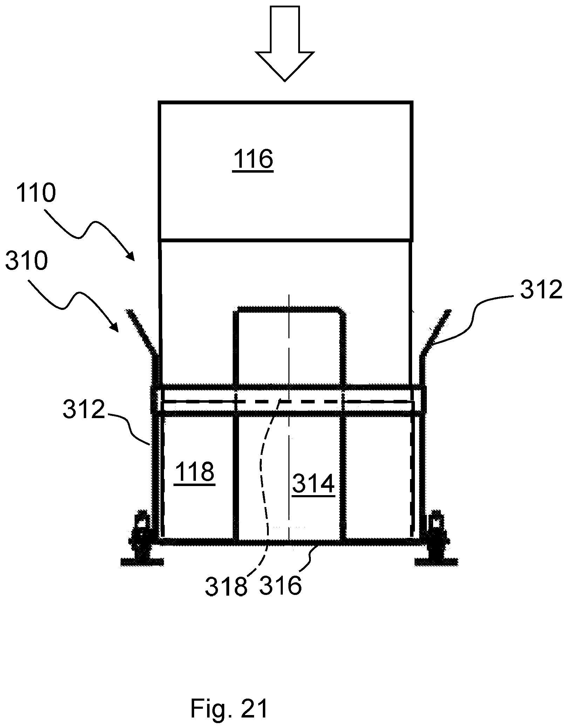

Figur 19 zeigt eine Seitenansicht der Montagevorrichtung 310, Figur 20 zeigt die Montagevorrichtung 302 in perspektivischer, und Figur 21 zeigt die Montagevorrichtung 310 mit eingesetztem Rahmen 110 in Form eines Umkartons mit geöffneten oberen und unteren Klappen 116, 118 in Seitenansicht.

Die Montagevorrichtung 310 weist vier Seitenwände 312, 314 auf, die an ihrem freien Ende nach außen abgewinkelt sind. Davon nehmen zwei gegenüberliegende Seitenwände 312 die ganze Breite der Montagevorrichtung 310 ein, während die zwei anderen gegenüberliegende Seitenwände 314 eine geringere Breite aufweisen. Innerhalb der Seitenwände 312, 314 ist eine tischartige Ablage 318 auf dem Boden 316 der Montagevorrichtung angeordnet (Figuren 19, 20)

Die tischartige Ablage 318 ist zu dem Seitenwänden 312, 314 beabstandet, so dass ein Umkarton (rahmen 110) mit geöffneten Klappen 118 über die Ablage geschoben werden kann. Die Klappen 118 stoßen am Boden 216 an. Die Höhe der Ablage 318 ist so bemessen, dass der Filterstrukturkörper 10 (Figur 10) oder der Grobabscheider 200 mit Feinfilterstufe 250 in den Rahmen 110 eingeschoben und, wenn auf der Ablage 318 abgelegt, in der richtigen Position in Relation zum Rahmen 110 sind, damit die Klappen 116, 118 geschlossen werden können.

Die rohseitige und die reinseitige Öffnung 112, 114 (Figur 10) im Rahmen 110 ist in diesem Zustand zweckmäßigerweise noch verschlossen und kann insbesondere durch eine Perforierung gekennzeichnet sein, die zum Gebrauch des Filtermoduls einfach aufgebrochen werden kann.

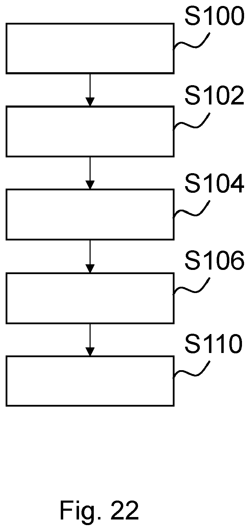

Figur 22 zeigt ein Flussdiagramm eines günstigen Verfahrens zum Aufbau eines Filtermoduls.

In Schritt S100 wird eine Stützstruktur 40 aus kammartigen Segmenten 42 und Verbindungselementen 50 zusammengesteckt

In Schritt S102 wird eine Fixierstruktur 70 aus Fixierelementen 72 und Verbindungselementen 74 zusammengesteckt.

Das Zusammenstecken der Stützstruktur 40 in Schritt S100 kann in einer Montagevorrichtung 300 erfolgen (Figuren 16), die erste Aufnahmen 302 zum Einstecken von Verbindungselementen 50 und senkrecht dazu verlaufende zweite Aufnahmen 304 zum Einstecken von kammartigen Strukturen 42 aufweist.

In Schritt S104 wird eine Filterlage 12 mit ihrer Auflagefläche entlang von Basis 44 und Zinken 46, 47 der Stützstruktur 40 wellenförmig in die Stützstruktur 40 eingelegt.

In Schritt S106 wird die Filterlage 12 auf der Stützstruktur 40 durch Einstecken wenigstens einer Fixierstruktur 70 in Zwischenräume der eingelegten Filterlage 12 fixiert.

Das Einlegen der Filterlage 12 in die Stützstruktur 40 in Schritt S104 und das Fixieren der Filterlage 12 in der Stützstruktur 40 in Schritt S106 kann vorteilhaft in der Montagevorrichtung 300 erfolgen.

Der Filterstrukturkörper 40 wird in Schritt S110 in einen Rahmen 110 eingeführt. Das Einführen kann vorteilhaft in einer Rahmen-Montagevorrichtung 310 erfolgen, wobei der Rahmen 110 in der Rahmen-Montagevorrichtung 310 über eine Ablage 316 geschoben wird und ein Einführen des Filterstrukturkörper 40 bis zur Ablage 316 in den Rahmen 110 erfolgt.

### Bezugszeichen

- 10: Filterstrukturkörper
- 12: Filterlage
- 13: erste Lage
- 14: zweite Lage
- 18: Einströmfläche
- 20: Einströmbereich
- 22: Ausströmfläche
- 24: Ausströmbereich

- 30: Wellenberg
- 32: Wellental
- 34: Überstand
- 36: Überstand
- 40: Stützstruktur
- 42: kammartiges Segment
- 44: Basis
- 45: Längsrichtung
- 46: Zinken
- 47: Zinken
- 48: basisfernes Ende
- 50: Verbindungselement
- 52: Aufnahme
- 54: Aufnahme
- 56: Aufnahme
- 58: Durchbruch

- 70: Fixierstruktur
- 72: Fixierelement
- 74: Verbindungselement
- 76: Aufnahme
- 78: Aufnahme
- 80: Versteifungselement

- 90: Richtung
- 91: Hauptdurchströmungsrichtung
- 100: Filtermodul
- 110: Rahmen
- 112: rohseitige Öffnung
- 114: reinseitige Öffnung
- 116: Klappe
- 118: Klappe

- 200: Grobabscheider
- 212: Beschleunigungsstrecke
- 214: Leitelement
- 216: Bodenteil
- 218: Deckelteil
- 220: Anströmfläche
- 222: Begrenzungswand
- 223: erste Abschlagfläche
- 224: Prallbereich
- 226: Ende Beschleunigungsstrecke
- 238: zweite Abschlagfläche
- 230: erster gekrümmter Abschnitt
- 232: entgegengesetzt gekrümmter Abschnitt
- 240: Spitze
- 250: Feinfilterstufe

- 300: Montagevorrichtung
- 302: Schlitz
- 304: Schlitz
- 310: Montagevorrichtung
- 312: Seitenwange
- 314: Seitenwange
- 316: Ablage
- 318: Boden

## Patentansprüche

1. Filtermodul (100) zum Abscheiden von Verunreinigungen aus einem Verunreinigungen enthaltenden Rohgasstrom, umfassend
wenigstens einen dreidimensionalen Filterstrukturkörper (10), durch welchen der Rohgasstrom leitbar ist, und
einen äußeren Rahmen (110) zur Aufnahme des Filterstrukturkörpers (10) zwischen einer rohseitigen Öffnung (112) und einer reinseitigen Öffnung (114),
wobei der wenigstens eine dreidimensionale Filterstrukturkörper (10) eine Stützstruktur (40) und eine darauf angeordnete Filterlage (12) umfasst, welche eine Einströmfläche (18) und eine Ausströmfläche (22) aufweist,
wobei die Stützstruktur (40) mehrere kammartig ausgebildete Segmente (42) jeweils mit einer Basis (44) aufweist, von der in Längsrichtung (45) der Basis (44) voneinander beabstandete Zinken (46, 47) gemeinsam in eine Richtung (90) abstehen,
wobei die kammartigen Segmente (42) deckungsgleich parallel zueinander angeordnet und mit orthogonal zu diesen angeordneten Verbindungselementen (50) verbunden sind und ein formstabiles Gerüst bilden, in welches die Filterlage (12) eingelegt ist,
wobei sich eine Auslegerichtung der Filterlage (12) in Längsrichtung (45) der Basis (44) erstreckt, und
wobei auf einer Seite der Filterlage (12) Einströmbereiche (20) der Einströmfläche (18) und auf einer dieser gegenüberliegenden Seite der Filterlage (12) Ausströmbereiche (24) der Ausströmfläche (22) angeordnet sind, die sich jeweils entlang der Zinken (46, 47) zwischen ihrer Basis (44) und basisfernen Enden (48) der Zinken (46, 47) erstrecken.

2. Filtermodul nach Anspruch 1, **dadurch gekennzeichnet, dass** die Filterlage (12) mit wenigstens einer Fixierstruktur (70), umfassend wenigstens ein Fixierelement (72), in der Stützstruktur (40) fixiert ist.

3. Filtermodul nach Anspruch 1 oder 2, **dadurch gekennzeichnet, dass** die Basis (44) einstückig ausgebildet ist.

4. Filtermodul nach einem der vorhergehenden Ansprüche, **dadurch gekennzeichnet, dass** die Zinken (46, 47) sich von der Basis (44) weg verjüngen.

5. Filtermodul nach einem der vorhergehenden Ansprüche, **dadurch gekennzeichnet, dass** die Filterlage (12) eine oder mehrere Filtermatten (12, 14) umfasst.

6. Filtermodul nach einem der vorhergehenden Ansprüche, **dadurch gekennzeichnet, dass** der Filterstrukturkörper (10) verbindungsmittelfrei in dem äußeren Rahmen (110) fixiert ist, insbesondere wobei der Filterstrukturkörper (10) formschlüssig in dem äußeren Rahmen (110) fixiert ist.

7. Filtermodul nach einem der vorhergehenden Ansprüche, **dadurch gekennzeichnet, dass** die Filterlage (12) entlang der Basis (44) der Segmente (42) der Stützstruktur (40) in Wellen ausgelegt ist, insbesondere wobei am Anfang und am Ende der Filterlage (12) ein Überstand (34) über die Stützstruktur (40) vorgesehen ist.

8. Filtermodul nach einem der vorhergehenden Ansprüche, **dadurch gekennzeichnet, dass** im Rahmen (110) ein Grobabscheider (200) gefolgt von einer Feinfilterstufe (250) angeordnet ist, insbesondere wobei der Grobascheider (200) zur Trägheitsabscheidung von in einem durchströmenden Fluid enthaltenen Komponenten, insbesondere Lackpartikel und/oder Lackagglomerate, insbesondere wobei der Grobabscheider (200) eingangsseitig wenigstens eine Beschleunigungsstrecke (212) für das Fluid aufweist, in welcher das Fluid in einer Durchströmungsrichtung (91) beschleunigt wird und der Beschleunigungsstrecke (212) eine erste Abschlagfläche (223) für im Fluid enthaltene Komponenten nachgeschaltet ist.

9. Filtermodul nach einem der vorhergehenden Ansprüche, **dadurch gekennzeichnet, dass** eine Ausdehnung der Beschleunigungsstrecke (212) zwischen Bodenteil (216) und Deckelteil (218) des Grobabscheiders (200) quer, insbesondere senkrecht, zu Wellen der Filterlage (12) der Feinfilterstufe (250) ausgerichtet ist.

10. Filterstrukturkörper (10) für ein Filtermodul (100) zum Abscheiden von Verunreinigungen aus einem Verunreinigungen enthaltenden Rohgasstrom, insbesondere nach einem der vorhergehenden Ansprüche, umfassend
eine Stützstruktur (40) und eine darauf angeordnete Filterlage (12), welche eine Einströmfläche (18) und eine Ausströmfläche (22) aufweist,
wobei die Stützstruktur (40) mehrere kammartig ausgebildete Segmente (42) jeweils mit einer Basis (44) aufweist, von der voneinander beabstandete Zinken (46, 47) gemeinsam in eine Richtung (90) abstehen,
wobei die kammartigen Segmente (42) deckungsgleich parallel zueinander angeordnet und mit orthogonal zu diesen angeordneten Verbindungselementen (50) verbunden sind und zum Einlegen der Filterlage (12) ein formstabiles Gerüst bilden,
wobei sich eine Auslegerichtung der Filterlage (12) in Längsrichtung (45) der Basis (44) erstreckt, und
wobei auf einer Seite der Filterlage (12) Einströmbereiche (20) der Einströmfläche (18) und auf einer dieser gegenüberliegenden Seite der Filterlage Ausströmbereiche (24) der Ausströmfläche (22) angeordnet sind, die sich jeweils entlang der Zinken (46, 47) zwischen Basis (44) und basisfernem Enden (48) der Zinken (46, 47) erstrecken.

11. Filterstrukturkörper nach Anspruch 10, **dadurch gekennzeichnet, dass** die Filterlage (12) mit wenigstens einer Fixierstruktur (70) umfassend wenigstens ein Fixierelement (72) in der Stützstruktur (40) fixiert ist.

12. Filterstrukturkörper nach Anspruch 10 oder 11, **dadurch gekennzeichnet, dass** die Basis (44) zusammenhängend ausgebildet ist.

13. Filterstrukturkörper nach einem der Ansprüche 10 bis 12, **dadurch gekennzeichnet, dass** die Zinken (46, 47) sich von der Basis (44) weg verjüngen.

14. Filterstrukturkörper nach einem der Ansprüche 10 bis 13, **dadurch gekennzeichnet, dass** die Stützstruktur (40) die Filterlage (12) bezogen auf eine Ausdehnung der Filterlage (12) im Strömungsquerschnitt im Wesentlichen linienförmig berührt.

15. Filterstrukturkörper nach einem der Ansprüche 10 bis 14, **dadurch gekennzeichnet, dass** die Filterlage (12) an ihren Enden entlang der Basis (44) und/oder an ihren Seiten quer zur Basis (44) über die Stützstruktur (40) hinausragt.

16. Bausatz zur Herstellung eines Filterstrukturkörpers (10) nach einem der Ansprüche 10-15 für ein Filtermodul (100) zum Abscheiden von Verunreinigungen aus einem Verunreinigungen enthaltenden Rohgasstrom, insbesondere nach einem der Ansprüche 1 bis 9, wobei der Filterstrukturkörper (10) eine Stützstruktur (40) aufweist, wobei
die Stützstruktur (40) aus Komponenten (42, 50, 52, 54) zusammensetzbar ist, die aus einem vorgeprägten und/oder vorgestanzten Zuschnitt, insbesondere einem vorgeprägten und/oder vorgestanzten Zuschnitt aus Karton und/oder Wellpappe und/oder Faserformteilen und/oder Tiefziehteilen aus Kunststoff, entnehmbar sind.

17. Bausatz nach Anspruch 16, **dadurch gekennzeichnet, dass** im Zuschnitt Komponenten (72, 74) für ein oder mehrere Fixierstrukturen (70) umfasst sind.

18. Verfahren zur Herstellung eines eine Stützstruktur (40) umfassenden Filterstrukturkörpers (10), nach einem der Ansprüche 10 bis 15 für ein Filtermodul (100) zum Abscheiden von Verunreinigungen aus einem Verunreinigungen enthaltenden Rohgasstrom, insbesondere nach einem der Ansprüche 1 bis 9, umfassend
Zusammenstecken (S100) einer formstabilen Stützstruktur (40) aus mehreren kammartigen Segmenten (42) und Verbindungselementen (50),
wobei die kammartigen Segmente (42) deckungsgleich parallel zueinander angeordnet und mit orthogonal zu diesen angeordneten Verbindungselementen (50) verbunden sind und zum Einlegen einer Filterlage (12) ein formstabiles Gerüst bilden;
Zusammenstecken (S102) einer Fixierstruktur (70) aus Fixierelementen (72) und Verbindungselementen (74);
Einlegen (S104) der Filterlage (12) mit ihrer Auflagefläche entlang von Basis (44) und Zinken (46, 47) der Stützstruktur (40);
Fixieren (S106) der Filterlage (12) auf der Stützstruktur (40) durch Einstecken wenigstens einer Fixierstruktur (70) in Zwischenräume der eingelegten Filterlage (12).

19. Verfahren nach Anspruch 18, wobei das Zusammenstecken (S100) der Stützstruktur (40) in einer Montagevorrichtung (300) erfolgt, die erste Aufnahmen (302) zum Einstecken von Verbindungselementen (50) und senkrecht dazu verlaufende zweite Aufnahmen (304) zum Einstecken von kammartigen Strukturen (42) aufweist.

20. Verfahren nach einem der Ansprüche 18 oder 19, wobei das Einlegen (S104) und Fixieren (S106) der Filterlage (12) in die Stützstruktur (40) in der Montagevorrichtung (300) erfolgt.

21. Verfahren zur Herstellung eines Filtermoduls (100) zum Abscheiden von Verunreinigungen aus einem Verunreinigungen enthaltenden Rohgasstrom, nach einem der Ansprüche 1 bis 9, mit einem eine Stützstruktur (40) umfassenden Filterstrukturkörper (10), insbesondere nach einem der Ansprüche 10 bis 15, wobei der Filterstrukturkörper (40) in einer Rahmen-Montagevorrichtung (310) in einen Rahmen (110) eingeführt wird, wobei der Rahmen (110) in der Rahmen-Montagevorrichtung (310) über eine Ablage (316) geschoben wird und ein Einführen (S110) des Filterstrukturkörper (40) bis zur Ablage (316) in den Rahmen (110) erfolgt.

## Claims

1. Filter module (100) for separating impurities from a raw gas stream containing impurities, comprising
at least one three-dimensional filter structure body (10) through which the raw gas stream can be conducted, and
an outer frame (110) for receiving the filter structure body (10) between a raw-side opening (112) and a clean-side opening (114),
wherein the at least one three-dimensional filter structure body (10) comprises a support structure (40) and a filter sheet (12) arranged thereon, which filter sheet has an inflow surface (18) and an outflow surface (22),
wherein the support structure (40) has a plurality of comb-like segments (42) each having a base (44) from which prongs (46, 47) spaced apart from one another in the longitudinal direction (45) of the base (44) project jointly in a direction (90),
wherein the comb-like segments (42) are arranged congruently parallel to one another and are connected by connecting elements (50) arranged orthogonally thereto and form a dimensionally stable framework into which the filter sheet (12) is inserted,
wherein a laying direction of the filter sheet (12) extends in the longitudinal direction (45) of the base (44), and
wherein inflow regions (20) of the inflow surface (18) are arranged on one side of the filter sheet (12) and outflow regions (24) of the outflow surface (22) are arranged on an opposite side of the filter sheet (12), which outflow regions each extend along the prongs (46, 47) between their base (44) and ends (48) of the prongs (46, 47) remote from the base.

2. Filter module according to claim 1, **characterised in that** the filter sheet (12) is fixed in the support structure (40) using at least one fixing structure (70) comprising at least one fixing element (72).

3. Filter module according to claim 1 or 2, **characterised in that** the base (44) is formed in one piece.

4. Filter module according to any of the preceding claims, **characterised in that** the prongs (46, 47) taper away from the base (44).

5. Filter module according to any of the preceding claims, **characterised in that** the filter sheet (12) comprises one or more filter mats (12, 14).

6. Filter module according to any of the preceding claims, **characterised in that** the filter structure body (10) is fixed in the outer frame (110) without connecting means, in particular wherein the filter structure body (10) is form-fittingly fixed in the outer frame (110).

7. Filter module according to any of the preceding claims, **characterised in that** the filter sheet (12) is laid out in corrugations along the base (44) of the segments (42) of the support structure (40), in particular wherein a protrusion (34) beyond the support structure (40) is provided at the start and end of the filter sheet (12).

8. Filter module according to any of the preceding claims, **characterised in that** a coarse separator (200) followed by a fine filtration stage (250) is arranged in the frame (110), in particular wherein the coarse separator (200) for inertial separation of components contained in a fluid flowing through it, in particular paint particles and/or paint agglomerates, in particular wherein the coarse separator (200) has at least one acceleration section (212) for the fluid on its inlet side, in which acceleration section the fluid is accelerated in a flow direction (91) and a first stripping surface (223) for components contained in the fluid is arranged downstream of the acceleration section (212).

9. Filter module according to any of the preceding claims, **characterised in that** an extension of the acceleration section (212) between the bottom part (216) and the cover part (218) of the coarse separator (200) is oriented transversely, in particular perpendicularly, to corrugations of the filter sheet (12) of the fine filtration stage (250).

10. Filter structure body (10) for a filter module (100) for separating impurities from a raw gas stream containing impurities, in particular according to any of the preceding claims, comprising
a support structure (40) and a filter sheet (12) arranged thereon, which filter sheet has an inflow surface (18) and an outflow surface (22),
wherein the support structure (40) has a plurality of comb-like segments (42) each having a base (44) from which prongs (46, 47) spaced apart from one another project jointly in a direction (90),
wherein the comb-like segments (42) are arranged congruently parallel to one another and are connected by connecting elements (50) arranged orthogonally thereto and form a dimensionally stable framework for inserting the filter sheet (12),
wherein a laying direction of the filter sheet (12) extends in the longitudinal direction (45) of the base (44), and
wherein inflow regions (20) of the inflow surface (18) are arranged on one side of the filter sheet (12) and outflow regions (24) of the outflow surface (22) are arranged on an opposite side of the filter sheet, which outflow regions each extend along the prongs (46, 47) between the base (44) and ends (48) of the prongs (46, 47) remote from the base.

11. Filter structure body according to claim 10, **characterised in that** the filter sheet (12) is fixed in the support structure (40) using at least one fixing structure (70) comprising at least one fixing element (72).

12. Filter structure body according to claim 10 or 11, **characterised in that** the base (44) is formed contiguously.

13. Filter structure body according to any of claims 10 to 12, **characterised in that** the prongs (46, 47) taper away from the base (44).

14. Filter structure body according to any of claims 10 to 13, **characterised in that** the support structure (40) contacts the filter sheet (12) substantially linearly in relation to an extension of the filter sheet (12) in the flow cross-section.

15. Filter structure body according to any of claims 10 to 14, **characterised in that** the filter sheet (12) projects beyond the support structure (40) at its ends along the base (44) and/or at its sides transversely to the base (44).

16. Kit for producing a filter structure body (10) according to any of claims 10-15 for a filter module (100) for separating impurities from a raw gas stream containing impurities, in particular according to any of claims 1 to 9, wherein the filter structure body (10) has a support structure (40),
wherein the support structure (40) can be composed of components (42, 50, 52, 54) which can be removed from a pre-embossed and/or pre-punched blank, in particular a pre-embossed and/or pre-punched blank made of cardboard and/or corrugated cardboard and/or fibre mouldings and/or deep-drawn parts made of plastic.

17. Kit according to claim 16, **characterised in that** components (72, 74) for one or more fixing structures (70) are included in the blank.

18. Method for producing a filter structure body (10) comprising a support structure (40), according to any of claims 10 to 15 for a filter module (100) for separating impurities from a raw gas stream containing impurities, in particular according to any of claims 1 to 9, comprising assembling (S100) a dimensionally stable support structure (40) from a plurality of comb-like segments (42) and connecting elements (50),
wherein the comb-like segments (42) are arranged congruently parallel to one another and are connected by connecting elements (50) arranged orthogonally thereto and form a dimensionally stable framework for inserting a filter sheet (12);
assembling (S102) a fixing structure (70) from fixing elements (72) and connecting elements (74);
inserting (S104) the filter sheet (12) with its contact surface along the base (44) and prongs (46, 47) of the support structure (40);
fixing (S106) the filter sheet (12) on the support structure (40) by slotting at least one fixing structure (70) into interstices in the inserted filter sheet (12).

19. Method according to claim 18, wherein the support structure (40) is assembled (S100) in a mounting device (300) having first receptacles (302) for slotting in connecting elements (50) and second receptacles (304) extending perpendicularly thereto for slotting in comb-like structures (42).

20. Method according to any of claims 18 or 19, wherein the inserting (S104) and fixing (S106) of the filter sheet (12) into the support structure (40) takes place inside the mounting device (300).

21. Method for producing a filter module (100) for separating impurities from a raw gas stream containing impurities, according to any of claims 1 to 9, having a filter structure body (10) comprising a support structure (40), in particular according to any of claims 10 to 15, wherein the filter structure body (40) is introduced into a frame (110) inside a frame-mounting device (310), wherein the frame (110) is slid across a tray (316) inside the frame-mounting device (310) and the filter structure body (40) is introduced (S110) into the frame (110) as far as the tray (316).

## Revendications

1. Module de filtration (100) pour séparer des impuretés d'un courant de gaz brut contenant des impuretés, comprenant
au moins un corps de structure de filtration tridimensionnel (10), à travers lequel le flux de gaz brut peut être conduit, et
un cadre extérieur (110) pour recevoir le corps de structure de filtration (10) entre une ouverture côté brut (112) et une ouverture côté pur (114),
dans lequel le au moins un corps de structure de filtration tridimensionnel (10) comprend une structure de support (40) et une couche de filtre (12) agencée sur celle-ci, laquelle présente une surface d'entrée (18) et une surface de sortie (22),
dans lequel la structure de support (40) présente plusieurs segments (42) réalisés à la manière d'un peigne, respectivement avec une base (44), à partir de laquelle des dents (46, 47) espacées les unes des autres dans la direction longitudinale (45) de la base (44) font saillie ensemble dans une direction (90),
dans lequel les segments (42) en forme de peigne sont agencés parallèlement les uns aux autres en coïncidence et sont reliés par des éléments de liaison (50) agencés orthogonalement à ceux-ci et forment une ossature indéformable dans laquelle est insérée la couche de filtre (12),
dans lequel une direction d'extension de la couche de filtre (12) s'étend dans la direction longitudinale (45) de la base (44), et
dans lequel des zones d'entrée (20) de la surface d'entrée (18) sont agencées sur un côté de la couche de filtre (12) et des zones de sortie (24) de la surface de sortie (22) sont agencées sur un côté de la couche de filtre (12) opposé à celui-ci, lesquelles s'étendent respectivement le long des dents (46, 47) entre leur base (44) et des extrémités (48) des dents (46, 47) éloignées de la base.

2. Module de filtration selon la revendication 1, **caractérisé en ce que** la couche de filtre (12) est fixée dans la structure de support (40) avec au moins une structure de fixation (70), comprenant au moins un élément de fixation (72).

3. Module de filtration selon la revendication 1 ou 2, **caractérisé en ce que** la base (44) est formée d'une seule pièce.

4. Module de filtration selon l'une quelconque des revendications précédentes, **caractérisé en ce que** les dents (46, 47) s'effilent en s'éloignant de la base (44).

5. Module de filtration selon l'une quelconque des revendications précédentes, **caractérisé en ce que** la couche de filtre (12) comprend un ou plusieurs éléments filtrants (12, 14).

6. Module de filtration selon l'une quelconque des revendications précédentes, **caractérisé en ce que** le corps de structure de filtration (10) est fixé sans moyen de liaison dans le cadre extérieur (110), en particulier dans lequel le corps de structure de filtration (10) est fixé par complémentarité de formes dans le cadre extérieur (110).

7. Module de filtration selon l'une quelconque des revendications précédentes, **caractérisé en ce que** la couche de filtre (12) est conçue en ondulations le long de la base (44) des segments (42) de la structure de support (40), en particulier dans lequel une saillie (34) est prévue sur la structure de support (40) au début et à la fin de la couche de filtre (12).

8. Module de filtration selon l'une quelconque des revendications précédentes, **caractérisé en ce qu'**un séparateur de particules brutes (200) suivi d'un étage de filtration fine (250) est agencé dans le cadre (110), en particulier dans lequel le séparateur de particules brutes (200) est destiné à la séparation inertielle de composants contenus dans un fluide qui le traverse, en particulier des particules de peinture et/ou des agglomérats de peinture, en particulier dans lequel le séparateur de particules brutes (200) présente du côté entrée au moins une section d'accélération (212) pour le fluide, dans laquelle le fluide est accéléré dans une direction de passage (91) et une première surface de séparation (223) pour les composants contenus dans le fluide est montée en aval de la section d'accélération (212).

9. Module de filtration selon l'une quelconque des revendications précédentes, **caractérisé en ce qu'**une extension de la section d'accélération (212) entre la partie de fond (216) et la partie de couvercle (218) du séparateur de particules brutes (200) est orientée transversalement, en particulier perpendiculairement, aux ondulations de la couche de filtre (12) de l'étage de filtration fine (250).

10. Corps de structure de filtration (10) pour un module de filtration (100) pour la séparation d'impuretés d'un courant de gaz brut contenant des impuretés, en particulier selon l'une quelconque des revendications précédentes, comprenant
une structure de support (40) et une couche de filtre (12) agencée sur celle-ci, qui présente une surface d'entrée (18) et une surface de sortie (22),
dans lequel la structure de support (40) présente plusieurs segments (42) réalisés en forme de peigne, chacun avec une base (44) à partir de laquelle des dents (46, 47) espacées les unes des autres font saillie ensemble dans une direction (90),
dans lequel les segments (42) en forme de peigne sont agencés parallèlement les uns aux autres en coïncidence et sont reliés par des éléments de liaison (50) agencés orthogonalement à ceux-ci et forment une ossature indéformable pour la mise en place de la couche de filtre (12),
dans lequel une direction d'extension de la couche de filtre (12) s'étend dans la direction longitudinale (45) de la base (44), et
dans lequel des zones d'entrée (20) de la surface d'entrée (18) sont agencées sur un côté de la couche de filtre (12) et des zones de sortie (24) de la surface de sortie (22) sont agencées sur un côté de la couche de filtre opposé à celui-ci, lesquelles s'étendent respectivement le long des dents (46, 47) entre la base (44) et les extrémités (48) des dents (46, 47) éloignées de la base.

11. Corps de structure de filtration selon la revendication 10, **caractérisé en ce que** la couche de filtre (12) est fixée dans la structure de support (40) avec au moins une structure de fixation (70) comprenant au moins un élément de fixation (72).

12. Corps de structure de filtration selon la revendication 10 ou 11, **caractérisé en ce que** la base (44) est réalisée d'un seul tenant.

13. Corps de structure de filtration selon l'une quelconque des revendications 10 à 12, **caractérisé en ce que** les dents (46, 47) s'effilent en s'éloignant de la base (44).

14. Corps de structure de filtration selon l'une quelconque des revendications 10 à 13, **caractérisé en ce que** la structure de support (40) est en contact avec la couche de filtre (12) de manière sensiblement linéaire par rapport à une extension de la couche de filtre (12) dans la section transversale d'écoulement.

15. Corps de structure de filtration selon l'une quelconque des revendications 10 à 14, **caractérisé en ce que** la couche de filtre (12) dépasse de la structure de support (40) à ses extrémités le long de la base (44) et/ou sur ses côtés transversalement à la base (44).

16. Kit de fabrication d'un corps de structure de filtration (10) selon l'une quelconque des revendications 10 à 15 pour un module de filtration (100) destiné à séparer des impuretés d'un flux de gaz brut contenant des impuretés, en particulier selon l'une quelconque des revendications 1 à 9, dans lequel le corps de structure de filtration (10) comprend une structure de support (40),
dans lequel la structure de support (40) peut être assemblée à partir de composants (42, 50, 52, 54) qui peuvent être prélevés dans une découpe pré-emboutie et/ou prédécoupée, en particulier une découpe pré-emboutie et/ou prédécoupée en carton et/ou en carton ondulé et/ou en pièces moulées en fibres et/ou en pièces embouties en plastique.

17. Kit selon la revendication 16, **caractérisé en ce que** des composants (72, 74) pour une ou plusieurs structures de fixation (70) sont compris dans la découpe.

18. Procédé de fabrication d'un corps de structure de filtration (10) comprenant une structure de support (40), selon l'une quelconque des revendications 10 à 15, pour un module de filtration (100) destiné à séparer des impuretés d'un flux de gaz brut contenant des impuretés, en particulier selon l'une quelconque des revendications 1 à 9, comprenant l'assemblage (S100) d'une structure de support (40) indéformable composée de plusieurs segments (42) en forme de peigne et d'éléments de liaison (50),
dans lequel les segments (42) en forme de peigne sont agencés parallèlement les uns aux autres en coïncidence et sont reliés par des éléments de liaison (50) agencés orthogonalement à ceux-ci et forment une ossature indéformable pour la mise en place d'une couche de filtre (12) ;
l'assemblage (S102) d'une structure de fixation (70) constituée d'éléments de fixation (72) et d'éléments de liaison (74) ;
mise en place (S104) de la couche de filtre (12) avec sa surface d'appui le long de la base (44) et des dents (46, 47) de la structure de support (40) ;
la fixation (S106) de la couche de filtre (12) sur la structure de support (40) en insérant au moins une structure de fixation (70) dans des espaces intermédiaires de la couche de filtre (12) insérée.

19. Procédé selon la revendication 18, dans lequel l'assemblage (S100) de la structure de support (40) est réalisé dans un dispositif de montage (300) qui comprend des premiers logements (302) pour l'emboîtement d'éléments de liaison (50) et des seconds logements (304) perpendiculaires aux premiers pour l'emboîtement de structures (42) en forme de peigne.

20. Procédé selon l'une quelconque des revendications 18 ou 19, dans lequel la mise en place (S104) et la fixation (S106) de la couche de filtre (12) dans la structure de support (40) sont effectuées dans le dispositif de montage (300).

21. Procédé de fabrication d'un module de filtration (100) pour séparer des impuretés d'un flux de gaz brut contenant des impuretés, selon l'une quelconque des revendications 1 à 9, avec un corps de structure de filtration (10) comprenant une structure de support (40), en particulier selon l'une quelconque des revendications 10 à 15, dans lequel le corps de structure de filtration (40) est introduit dans un cadre (110) dans un dispositif de montage de cadre (310), dans lequel le cadre (110) est poussé au-dessus d'un dépôt (316) dans le dispositif de montage de cadre (310) et une introduction (S110) du corps de structure de filtration (40) jusqu'au dépôt (316) dans le cadre (110) est effectuée.
